# EUROPÄISCHE PATENTSCHRIFT

(11) **EP 2 742 906 B1**
(45) Veröffentlichungstag und Bekanntmachung des Hinweises auf die Patenterteilung: **06.07.2016**
(21) Anmeldenummer: 12197441.4
(22) Anmeldetag: 17.12.2012
(51) Int. Cl.: A61C 9/00, A61C 13/00

(54) **Verfahren und System zum Aufbau einer Dentalprothese**
Method and system for creating a dental prosthesis
Procédé et système de montage d'une prothèse dentaire

(43) Veröffentlichungstag der Anmeldung: 18.06.2014
(73) Patentinhaber: Ivoclar Vivadent AG, 9494 Schaan (LI)
(72) Erfinder: Heinz, Markus, 39025 Naturns (IT); Foser, Hans Peter, 9496 Balzers (LI); Ruess, Wolfgang, 88131 Lindau (DE); Baaske, Thomas, 9472 Grabs (CH)
(74) Vertreter: Uexküll & Stolberg

(56) Entgegenhaltungen:
- WO-A2-2012/061652
- WO-A2-2012/061655
- US-A- 4 345 900

## Beschreibung

Die Erfindung betrifft ein Verfahren zum Aufbau einer Dentalprothese, bei dem die Formen von Oberkiefer- und Unterkieferbasis mit plastischem Material mit Standardabformlöffeln oder mit individualisierten Abformlöffeln aufgenommen werden, die auf Grundlage einer vorhergehenden Erfassung der Formen mit Standardformlöffeln oder durch Erfassung der Formen durch digitales Scannen und/oder fototechnische Erfassung individuell an den Kiefer des Patenten angepasst hergestellt worden sind, bei der Aufnahme der Formen von Oberkiefer- und Unterkieferbasis die Lage der Okklusionsebene mit einem Okklusionom durch Ausrichten parallel zur Bipupillarlinie und zur Camperschen Ebene relativ zu Oberkiefer- und Unterkieferbasis erfasst und digital gespeichert wird, die Formen der in dem plastischen Material aufgenommenen Oberkiefer- und Unterkieferbasis digitalisiert und in einer Datenverarbeitungseinrichtung als digitales Prothesenmodell gespeichert werden, die Oberkiefer- und Unterkiefer-Prothesenbasen nach Maßgabe des digitalen Prothesenmodells aus Dentalmaterialien durch abtragende oder aufbauende Verfahren erstellt werden.

Die Erfindung betrifft ferner ein System zum Aufbau einer Dentaltotalprothese, mit

Standardabformlöffeln oder individualisierten Abformlöffeln zum Aufnehmen der Formen von Oberkiefer- und Unterkieferbasis mit plastischem Material, wobei die individualisierten Abformlöffeln auf Grundlage einer vorhergehenden Erfassung der Formen mit Standardformlöffeln oder durch Erfassung der Formen durch digitales Scannen und/oder fototechnische Erfassung individuell an den Kiefer des Patenten angepasst hergestellt worden sind,
einem Okklusionom zum Erfassen der Lage der Okklusionsebene durch Ausrichten parallel zur Bipupillarlinie und zur Camperschen Ebene bei der Aufnahme der Formen von Oberkiefer- und Unterkieferbasis und einem Speicher zur Speicherung der digitalisierten Lage der Okklusionsebene relativ zur von Oberkiefer- und Unterkieferbasis,
einer Abtastungseinrichtung zum Erfassen und Digitalisieren der Formen der in dem plastischen Material aufgenommenen Oberkiefer- und Unterkieferbasis,
einer Datenverarbeitungseinrichtung zum Speichern der digitalisierten Formen von Oberkiefer- und Unterkieferbasis als digitales Prothesenmodell,
einem Fertigungsgerät zum Erstellen die Oberkiefer- und Unterkiefer-Prothesenbasen nach Maßgabe des digitalen Prothesenmodells aus Dentalmaterialien unter Steuerung der Datenverarbeitungseinrichtung durch abtragende oder aufbauende Verfahren.

Ein frühes Verfahren und System in dieser Richtung ist zum Beispiel aus dem Artikel "CAD und CAM - Möglichkeiten der Optimierung in der Totalprothetik", Wolfgang Becker, der in zwei Teilen in Quintessenz Zahntechnik 17, 397 - 404 (1991) und 511 - 519 (1991) veröffentlicht worden ist, bekannt. Darin wird vorgeschlagen, die Formen von Oberkiefer- und Unterkieferbasis phototechnisch zu erfassen und daraus ein digitales Modell von Oberkiefer- und Unterkieferbasis zu erzeugen. Diese Daten werden in einem nachfolgenden computergesteuerten Fräsprozess angewendet, um die Oberkiefer- und Unterkiefer-Prothesenbasen herzustellen.

Ein Verfahren nach dem Oberbegriff von Patentanspruch 1 ist aus WO 2012/061652 A2 bekannt. Bei dem bekannten Verfahren werden die Formen von Oberkiefer- und Unterkieferbasis mit Standardabformlöffeln oder mit individualisierten Abformlöffeln als Abdrücke im plastischen Material aufgenommen. Als individualisierte Abformlöffel werden hier solche bezeichnet, die auf Grundlage einer vorhergehenden Erfassung der Formen von Oberkiefer und Unterkiefer gewonnen wurden und die so bereits an die spezifische Anatomie des Patienten individuell angepasst sind. Während oder vor oder nach der Abformung können verschiedene anatomische Daten des Patienten aufgenommen werden, zum Beispiel kann die Lage der Okklusionsebene relativ zu Oberkiefer- und Unterkieferbasis bestimmt und gespeichert werden. In einem von der Anmelderin tatsächlich vorgestellten System werden auch Schablonen eines Frontzahnbogens verwendet, deren Position zu den Abformlöffeln durch Anlegen an den Abformlöffel markiert wird. Die Position der Frontzahnbogenschablone wird beim digitalen Abtasten der in dem plastischen Material aufgenommenen Oberkiefer- und Unterkieferbasis mit digitalisiert und so in das digitale Prothesenmodell aufgenommen.

Ein ganz ähnliches computer-implementiertes Verfahren ist aus WO 2012/061655 A2 bekannt, das über die oben beschriebenen Schritte hinaus unter Anwendung einer Reihe von vorher festgelegten Regeln Zähne konstruiert oder auswählt, die am besten zu der bestimmten Kieferbasis passen. Die Zähne können z.B. aus einer Bibliothek mit einer Vielzahl gespeicherten Zähnen ausgewählt werden.

Es ist Aufgabe der vorliegenden Erfindung, ein verbessertes Verfahren und ein verbessertes System zum Aufbau einer Dentalprothese anzugeben, bei dem ein digitales Prothesenmodell mit verbesserter Positionierung der Zahnaufstellung erzeugt werden kann. Ferner soll eine zielsicherere Auswahl eines optimalen Frontzahnbogens für die Prothese ermöglicht werden.

Zur Lösung dieser Aufgabe dient das Verfahren mit den Merkmalen des Patentanspruchs 1 und das System mit den Merkmalen des Patentanspruchs 11. Vorteilhafte Ausführungsformen sind in den Unteransprüchen angegeben.

Bei dem erfindungsgemäßen Verfahren steht ein Satz von oberen oder unteren Standard-Frontzahnbögen zur Verfügung, wobei in dem Satz Standard-Frontzahnbögen mit verschiedenen Frontzahngrößen und Frontzahnformen enthalten sind. In einer Datenbank sind für jeden Frontzahnbogen aus dem bereitgestellten Satz von Standard-Frontzahnbögen deren Formdaten gespeichert, die eine dreidimensionale räumliche Beschreibung der Zähne des Frontzahnbogens darstellen. Beim Aufnehmen der Formen von Ober- und Unterkieferbasis mit plastischem Material in den Abformlöffeln wird ein Frontzahnbogen aus dem bereitgestellten Satz von Standard-Frontzahnbögen ausgewählt, der am besten zu der Situation im Kiefer des Patienten passt. Dieser ausgewählte Standard-Frontzahnbogen wird dann an dem Abformlöffel positioniert, so dass er die gewünschte Stellung im Kiefer erhält und in dieser Position an dem Abformlöffel befestigt. Zur Bildung eines Ausgangspunktes für das digitale Prothesenmodell werden die Formen der in dem plastischen Material in den Abformlöffeln aufgenommenen Oberkiefer- und Unterkieferbasis mit dem an dem Abformlöffel befestigten Frontzahnbogen in registrierter Bissstellung durch Scannen digitalisiert und gespeichert. Aus der Datenbank mit den Frontzahnbogen-Formdaten des Satzes von Standard-Frontzahnbögen werden dann die Frontzahnbogen-Formdaten abgerufen, die zu dem ausgewählten Standard-Frontzahnbogen gehören. Diese werden nun in dem digitalen Prothesenmodell räumlich so positioniert, dass sich eine möglichst geringe Abweichung zur Position des tatsächlich eingescannten, an dem Abformlöffel befestigten ausgewählten Frontzahnbogens ergibt. Mit anderen Worten wird in dem digitalen räumlichen Modell der Prothese die Positionierung der importierten Frontzahnbogen-Formdaten des ausgewählten Standard-Frontzahnbogens durch Verschieben und Verschwenken so lange variiert, bis eine minimale Abweichung gegenüber dem eingescannten Frontzahnbogen erreicht ist.

Auf diese Weise ist es dem Zahntechniker oder Zahnarzt möglich, beim Abformen der Formen von Oberkiefer- und Unterkieferbasis aus einem vorliegenden Satz von Standard-Frontzahnbögen verschiedene auszuprobieren und einen am besten geeigneten auszuwählen. Dieser wird dann in seiner gewünschten Position an dem Abformlöffel befestigt, so dass seine spätere Position in dem digitalen. Prothesenmodell festgelegt werden kann. Durch den Import der Standard-Frontzahnbogen-Formdaten des ausgewählten Standard-Frontzahnbogens aus der Datenbank wird eine höhere Genauigkeit des digitalen Prothesenmodells ermöglicht.

Das Verfahren kann zum Beispiel von einem Zahnarzt oder Zahntechniker ausgeführt werden, der die Abformungen vornimmt und der die Abformlöffel mit den in dem plastischen Material aufgenommenen Formen von Oberkiefer- und Unterkieferbasis und dem daran befestigten Frontzahnbogen in registrierter Bissstellung herstellt. Die Abformlöffel mit den aufgenommenen Formen und den daran befestigten Frontzahnbögen können dann in ein Zahnlabor gebracht werden, wo diese Form durch Scannen digitalisiert und gespeichert wird, um einen Ausgangspunkt für das digitale Prothesenmodell zu bilden. In dem Zahnlabor kann das digitale Prothesenmodell dann automatisch in der Datenverarbeitungseinrichtung durch Abruf von Formdaten für Standard-Frontzahnbögen und Backenzahnreihen komplettiert und auch interaktiv von dem Benutzer durch Eingaben und weiteren Formgebungen sukzessive verbessert werden. Das so erhaltene endgültige digitale Prothesenmodell kann dann zum Beispiel in einem CAM-Verfahren zum Fräsen der Prothesenbasen aus Kunststoffblöcken verwendet werden.

In einer bevorzugten Ausführungsform kann die Datenverarbeitungseinrichtung dazu eingerichtet sein, aus der Datenbank einen zu dem ausgewählten Standard-Frontzahnbogen für Ober- oder Unterkiefer passenden Antagonisten-Standard-Frontzahnbogen in Form von digitalen Antagonisten-Standard-Frontzahnbogen-Formdaten abzurufen und mit den Daten der zugehörigen Kieferbasis in dem digitalen Prothesenmodell so zu positionieren, dass eine optimale Lage zu dem ausgewählten Standard-Frontzahnbogen erzielt wird, dessen Formdaten bereits zuvor aus der Datenbank in das digitale Prothesenmodell integriert worden sind.

In einer weiteren bevorzugten Ausführungsform werden von der Datenverarbeitungseinrichtung nach Integration der Standard-Frontzahn-Formdaten und gegebenenfalls Antagonisten-Standard-Frontzahn-Formdaten mit den digitalisierten Daten der zugehörigen Kieferbasis automatisch eine oder mehrere zu dem Frontzahnbogen passende Backenzahnreihen zur Auswahl angeboten und nach Auswahl durch den Benutzer diese beschreibende digitale Backenzahnreihen-Formdaten aus der Datenbank abgerufen und mit den digitalisierten Kiefernbasisdaten im Anschluss passend zu den bereits integrierten Standard-Frontzahnbogen-Formdaten in das digitale Prothesenmodell eingepasst wird.

In einer bevorzugten Ausführungsform erzeugt die Datenverarbeitungseinrichtung eine graphische Darstellung des digitalen Prothesenmodells und bringt diese auf einem Bildschirm zur Anzeige. Die Datenverarbeitungseinrichtung stellt Programmfunktionen bereit, mit denen das digitale Prothesenmodell durch Einwirken auf die graphische Darstellung manipuliert werden kann. Insbesondere wird ein digitales Wachsmesser als Programmfunktion bereitgestellt, um das Design des Zahnfleisches und der Prothesenbasenoberflächen mit dem digitalen Wachsmesser in der graphischen Darstellung des digitalen Prothesenmodells zu gestalten und die so vorgenommenen Gestaltungen in das digitale Prothesenmodell zu übernehmen.

In einer bevorzugten Ausführungsform stellt die Datenverarbeitungseinrichtung eine Mehrzahl von vorgegebenen Oberflächentexturen zur Auswahl bereit, die nach Auswahl auf gewünschte Bereiche der Oberflächen des digitalen Prothesenmodells übertragbar sind.

In einer bevorzugten Ausführungsform wird von der Datenverarbeitungseinrichtung wenigstens ein Gingiva-Parameter zur Spezifizierung abgefragt. Darunter ist wenigstens einer der folgenden Gingiva-Parameter: gingivale Fassung der Zahnlängen der aufgestellten Zähne (d.h. die Tiefe, mit der die Zahnbasis in die Kavität in die Prothesenbasis hineinreicht), Mindestwandstärke von Oberkiefer- und Unterkieferbasis (d.h. eine minimale Dicke, die die Prothesenbasis an jedem Punkt haben muss), Oberflächentexturparameter der Gaumenoberfläche und Geometrieparameter des Übergangsbereichs von Prothesenoberfläche zum Zahn (d.h. die Innenwand der Kavität muss nicht in einer scharfen Kante in die oben anschließende Prothesenbasenoberfläche übergehen, sondern der Übergangsbereich kann abgerundet sein); diese eingegebenen Gingiva-Geometrieparameter werden in das digitale Prothesenmodell übernommen.

In einer bevorzugten Ausführungsform werden von der Datenverarbeitungseinrichtung wenigstens ein Zahnkavitätsparameter zur Spezifizierung abgefragt, wozu die Breite des Klebespaltes zwischen Innenwand der Zahnkavität und der eingeführten Zahnbasis und Ort und Anzahl von Abstandshaltern an der Innenwand der Zahnkavität gehören, mit denen die Zahnbasis definiert positioniert in der Zahnkavität gehalten werden, um überall einen Klebespalt in gewünschter Breite zwischen Innenwänden der Zahnkavität und Zahnbasis zu gewährleisten; die spezifizierten Zahnkavitätsparameter werden für alle Zahnkavitäten in das digitale Prothesenmodell übernommen.

In einer bevorzugten Ausführungsform wird in der Datenverarbeitungseinrichtung, wenn bei der Berechnung der Kavitäten für konfektionierte Kunststoffzähne festgestellt wird, dass die verbleibende Wandstärke der Prothesenbasis unter der Kavität eine vorgegebene Mindestwandstärke unterschreiten würde, berechnet und gespeichert, auf welche Länge der Kunststoffzahn zu reduzieren ist, um die vorgegebene Mindestwandstärke unter der Kavität zu erhalten. Die Kavität wird dann an die reduzierte Länge des Kunststoffzahns angepasst in dem digitalen Prothesenmodell gespeichert. Ferner wird der Kunststoffzahn in einer Fräseinrichtung unter Steuerung der Datenverarbeitungseinrichtung auf die gespeicherte reduzierte Länge des Kunststoffzahns verkürzt.

In einer bevorzugten Ausführungsform stellt die Datenverarbeitungseinrichtung ein Auswahlmenü für künstliche Zähne aus unterschiedlichen Materialtypen bereit, in dem für jede Zahnposition eine Materialauswahl aus Dentalmaterialien möglich ist. Mögliche Dentalmaterialien sind PMMA, Komposit, Zirkoniumdioxid, Lithiumdisilikat, und Dentalkeramik. In der Datenverarbeitungseinrichtung wird dann der ausgewählte Materialtyp in dem digitalen Prothesenmodell gespeichert.

In einer bevorzugten Ausführungsform wird zur Bestimmung der Lage der Okklusionsebene ein Okklusionom verwendet, das einen inneren Bissbogen und einen über Gelenke daran angebrachten äußeren Bogen aufweist. Der innere Bogen wird zwischen die Standardabformlöffel oder die individualisierten Abformlöffel eingeführt. Wahlweise kann das Okklusionom über eine Schnittstelle an dem oberen und/unteren Abformlöffel befestigt werden. Dann wird der äußere Bogen durch Verschwenken der Gelenke parallel zur Camperschen Ebene und zur Bipupillarlinie eingestellt. Die sich ergebenden Abweichungen der Parallelität des inneren Bissbogens zu dem ausgerichteten äußeren Bogen werden an einer Skala an den Gelenken abgelesen und gespeichert.

Die Erfindung schafft ferner ein System zum Aufbau einer Dentaltotalprothese, mit

Standardabformlöffeln oder individualisierten Abformlöffeln zum Aufnehmen der Formen von Oberkiefer- und Unterkieferbasis mit plastischem Material, wobei die individualisierten Abformlöffeln auf Grundlage einer vorhergehenden Erfassung der Formen mit Standardformlöffeln oder durch Erfassung der Formen durch digitales Scannen und/oder fototechnische Erfassung individuell an den Kiefer des Patenten angepasst hergestellt worden sind,
einem Okklusionom zum Erfassen der Lage der Okklusionsebene durch Ausrichten parallel zur Bipupillarlinie und zur Camperschen Ebene bei der Aufnahme der Formen von Oberkiefer- und Unterkieferbasis und einem Speicher zur Speicherung der digitalisierten Lage der Okklusionsebene relativ zur Oberkiefer- und Unterkieferbasis,
einer Abtastungseinrichtung zum Erfassen und Digitalisieren der Formen der in dem plastischen Material aufgenommenen Oberkiefer- und Unterkieferbasis,
einer Datenverarbeitungseinrichtung zum Speichern der digitalisierten Formen von Oberkiefer- und Unterkieferbasis als digitales Prothesenmodell,
einem Fertigungsgerät zum Erstellen der Oberkiefer- und Unterkiefer-Prothesenbasen nach Maßgabe des digitalen Prothesenmodells aus Dentalmaterialien unter Steuerung der Datenverarbeitungseinrichtung durch abtragende oder aufbauende Verfahren,
dadurch gekennzeichnet, dass
ein Satz von oberen oder unteren Standard-Frontzahnbögen zur Auswahl und Mittel zum Befestigen eines ausgewählten Standard-Frontzahnbogens in der gewünschten Position an dem Abformlöffel mit dem darin in dem plastischen Material abgeformten Ober- oder Unterkieferboden vorhanden sind,
die Abtastungseinrichtung dazu eingerichtet ist, zur Bildung eines Ausgangspunkts für das digitale Prothesenmodell die Formen der in dem plastischen Material in den Abformlöffeln aufgenommenen Oberkiefer- und Unterkieferbasis mit dem an dem Abformlöffel befestigten Frontzahnbogen in registrierter Bissstellung durch Scannen zu digitalisieren und zu speichern,
die Datenverarbeitungseinrichtung dazu eingerichtet ist, aus einer Datenbank, die digitale Standard-Frontzahnbogen-Formdaten für alle Standard-Frontzahnbögen enthält, die den ausgewählten Standard-Frontzahnbogen beschreibenden Standard-Frontzahnbogen-Formdaten abzurufen und mit den Daten der zugehörigen Kieferbasis in dem digitalen Prothesenmodell so zu integrieren, dass die Position der digitalen Standard-Frontzahnbogen-Formdaten relativ zu den digitalisierten Kieferbasisdaten möglichst gut mit der Position des an dem Abformlöffel befestigen Standard-Frontzahnbogens relativ zu der abgeformten Kieferbasis übereinstimmt.

In einer bevorzugten Ausführungsform des Systems ist die Datenverarbeitungseinrichtung dazu eingerichtet, für den ausgewählten Standard-Frontzahnbogen für Ober- oder Unterkiefer aus der Datenbank einen dazu passenden Antagonisten-Standard-Frontzahnbogen in Form von digitalen Antagonisten-Frontzahnbogen-Formdaten abzurufen und in das digitale Modell der zugehörigen Kieferbasis in dem digitalen Prothesenmodell so einzuführen, dass eine optimale Passung mit dem ausgewählten Standard-Frontzahnbogen erzielt wird.

In einer bevorzugten Ausführungsform des Systems ist die Datenverarbeitungseinrichtung dazu eingerichtet, nach Integration der Standard-Frontzahnbogen-Formdaten und gegebenenfalls der Antagonisten-Standard-Frontzahnbogen-Formdaten in das digitale Prothesenmodell eine oder mehrere in der Datenbank als zu dem ausgewählten Standard-Frontzahnbogen passend charakterisierte Backenzahnreihen zur Auswahl anzubieten. Nach Auswahl der abgerufenen entsprechenden digitalen Backenzahnreihen-Formdäten aus der Datenbank werden diese in das digitale Prothesenmodell passend zu den bereits integrierten Standard-Frontzahnbogen-Formdaten eingepasst.

In einer bevorzugten Ausführungsform des Systems weist dieses eine graphische Anzeige auf und ist die Datenverarbeitungseinrichtung dazu eingerichtet, eine graphische Darstellung des digitalen Prothesenmodells auf der Anzeige anzuzeigen. Von der Datenverarbeitungseinrichtung wird ein digitales Wachsmesser als Programmfunktion bereitgestellt, um einem Benutzer das Design des Zahnfleisches und der Prothesenbasenoberflächen mit dem digitalen Wachsmesser in der graphischen Anzeige des digitalen Prothesenmodells zu ermöglichen. Die in der graphischen Anzeige mit dem digitalen Wachsmesser vom Benutzer eingefügten Gestaltungen des Zahnfleisches und der Prothesenbasenoberflächen werden von der Datenverarbeitungseinrichtung in das digitale Prothesenmodell übernommen. In einer bevorzugten Ausführungsform des Systems ist die Datenverarbeitungseinrichtung dazu eingerichtet, mehrere vorgegebene Oberflächentexturen zur Auswahl bereitzustellen und diese nach Auswahl durch den Benutzer auf von dem Benutzer ausgewählte Bereiche der Oberflächen des digitalen Prothesenmodells übertragbar zu machen und diese in das digitale Prothesenmodell zu übernehmen.

In einer bevorzugten Ausführungsform des Systems ist die Datenverarbeitungseinrichtung dazu eingerichtet, wenigstens einen Gingiva-Parameter zur Spezifizierung abzufragen, wozu wenigstens einer der folgenden Parameter gehört: Gingivale Fassung der Zahnlängen der aufgestellten Zähne, Mindestwandstärke von Ober- und Unterkieferbasis, Oberflächentexturparameter der Gaumenoberfläche und Geometrieparameter des Übergangsbereichs von Prothesenbasiskörper zum Zahn, wobei die Datenverarbeitungseinrichtung dazu eingerichtet ist, eingegebene Gingiva-Parameter in das digitale Prothesenmodell zu übernehmen.

In einer bevorzugten Ausführungsform des Systems ist die Datenverarbeitungseinrichtung dazu eingerichtet, wenigstens einen Zahnkavitätsparameter zur Spezifizierung durch den Benutzer abzufragen, wobei zu den Zahnkavitätsparametern die Breite des Klebespaltes zwischen Innenwand der Zahnkavität und eingeführter Zahnbasis und Ort und Anzahl von Abstandshaltern an der Innenwand der Zahnkavität zur definierten Positionierung der Zahnbasis des eingeführten Zahns mit einem gleichmäßig breiten Klebespalt gehören, und die spezifizierten Zahnkavitätsparameter für alle Zahnkavitäten in das digitale Prothesenmodell zu übernehmen.

In einer bevorzugten Ausführungsform des Systems ist die Datenverarbeitungseinrichtung dazu eingerichtet, bei der Berechnung der Kavitäten für konfektionierte Kunststoffzähne festzustellen, ob die verbleibende Wandstärke der Prothesenbasis unter der Kavität eine vorgegebene Mindestwandstärke unterschreiten würde, und wenn ja, zu speichern, auf welche Länge der Kunststoffzahn zu reduzieren ist, um die vorgegebene Mindestwandstärke unter der Kavität einzuhalten, die Kavität an die reduzierte Länge des Kunststoffzahns anzupassen und in dem digitalen Prothesenmodell abzuspeichern. Anschließend kann die Datenverarbeitungseinrichtung mit diesen Daten eine Fräseinrichtung so steuern, dass der konfektionierte Kunststoffzahn auf die gespeicherte reduzierte Länge des Kunststoffzahns verkürzt wird.

In einer bevorzugten Ausführungsform des Systems ist die Datenverarbeitungseinrichtung weiter dazu eingerichtet, ein Auswahlmenü für künstliche Zähne aus unterschiedlichen Materialien bereitzustellen, in dem für jede Zahnposition eine Materialauswahl aus Dentalmaterial möglich ist, wobei die Datenverarbeitungseinrichtung weiter dazu eingerichtet ist, den ausgewählten Materialtyp bei der Berechnung der Kavitäten in den Prothesenbasiskörpern zu berücksichtigen.

In einer bevorzugten Ausführungsform des Systems weist das Okklusionom einen inneren Bissbogen und einen über Gelenke daran angebrachten äußeren Bogen auf, der parallel zur Camperschen Ebene und parallel zur Bipupillarlinie auszurichten ist, wonach die sich ergebene Abweichung der Parallelität des inneren Bissbogens gegenüber dem ausgerichteten äußeren Bogen an Skalen an den Gelenken ablesbar ist.

Die Erfindung wird im Folgenden anhand eines Ausführungsbeispiels in den Figuren beschrieben, in denen:
Fig. 1 eine Draufsicht auf Standardabformlöffel für Oberkiefer- und Unterkieferbasis mit plastischem Material darin zeigt,
Fig. 2 eine perspektivische Ansicht eines Centric Tray für eine Lagebestimmung von Oberkiefer und Unterkiefer zeigt,
Fig. 3 eine Abtasteinrichtung zum Scannen der abgeformten Formen von Oberkiefer- und Unterkieferbasis zeigt,
Fig. 4 die Formen von Oberkiefer- und Unterkieferbasis in einem virtuellen Artikulator zeigt,
Fig. 5 perspektivische Ansichten der auf Basis der eingescannten Daten der aufgenommenen Formen von Oberkiefer- und Unterkieferbasis hergestellten individualisierten Abformlöffel zeigen,
Fig. 6 eine perspektivische Ansicht eines individualisierten Abformlöffels bei dessen Herstellung in einer CAD/CAMgesteuerten Maschine auf Basis der eingescannten Daten der Formen von Oberkiefer- und Unterkieferbasis zeigt,
Fig. 7 Draufsichten auf die fertig gestellten individualisierten Abformlöffel zeigt,
Fig. 8 eine Ansicht eines individualisierten Abformlöffels beim Befüllen mit plastischem Material zeigt,
Fig. 9a) - c) perspektivische Ansichten eines Okklusionoms, des Okklusionoms bei der Bestimmung der Okklusionsebene und eine Detailansicht des Okklusionoms mit einer Skala zur Anzeige von Daten zur Lage der Okklusionsebene zeigen,
Fig. 10 eine perspektivische Ansicht eines individualisierten Abformlöffels für den Oberkiefer bei der Zufügung eines ausgewählten Standard-Frontzahnbogens zeigt,
Fig. 11 eine Ansicht der individualisierten Abformlöffel nach der Kieferrelationsbestimmung mittels Stützregistrat zeigt,
Fig. 12 eine Darstellung des digitalen Prothesenmodells bei der Integration der aus einer Datenbank abgerufenen Standard-Frontzahnbogenformdaten des ausgewählten Standard-Frontzahnbogens zeigt,
Fig. 13 eine Darstellung des digitalen Prothesenmodells der Unterkieferbasis von oben zeigt,
Fig. 14 eine perspektivische Detailansicht des digitalen Prothesenmodells bei der Integration von aus der Datenbank abgerufenen Backenzahnreihen in das digitale Prothesenmodell zeigt,
Fig. 15 eine Draufsicht auf den Unterkiefer des digitalen Prothesenmodells bei der Einfügung von Backenzahnreihen zeigt,
Fig. 16 eine perspektivische Darstellung des digitalen Prothesenmodells mit integrierten Zahnformdaten sämtlicher Zähne bei der Funktionskontrolle der Positionierung mit einem digitalen Artikulator zeigt,
Fig. 17 perspektivische Darstellungen des digitalen Prothesenmodells beim Modellieren des Zahnfleisches mittels eines digitalen Wachsmessers zeigt,
Fig. 18 eine Querschnittsansicht aus dem digitalen Prothesenmodell im Bereich einer Zahnkavität der Unterkieferbasis zeigt,
Fig. 19 eine perspektivische Ansicht einer in der Fertigung befindlichen Kieferprothesenbasis mit einem auf Basis des digitalen Prothesenmodells gesteuerten CAD/CAM-Fertigungsgerät zeigt,
Fig. 20 eine schematische Ansicht von konfektionierten Kunststoffzähnen bei der automatisch gesteuerten basalen Anpassung/Einkürzung zeigt,
Fig. 21 perspektivische Ansichten beim Einsetzen von Prothesenzähnen in die Prothesenbasis zeigt,
Fig. 22 eine perspektivische Ansicht der eingesetzten Dentalprothese bei der funktionellen und ästhetischen Kontrolle zeigt,
Fig. 23 eine Draufsicht auf mit Dentalgips hergestellte Situationsmodelle von Oberkiefer- und Unterkieferbasis zeigt,
Fig. 24 eine perspektivische Darstellung der Modelle von Oberkiefer- und Unterkieferbasis eingesetzt in einen Artikulator zeigt,
Fig. 25 eine perspektivische Ansicht der Modelle im Artikulator nach Herstellung individualisierter Abformlöffel zeigt,
Fig. 26 perspektivische Ansichten der hergestellten individualisierten Abformlöffel mit Schnittstelle zur Aufnahme des Transferbogensystems zeigt,
Fig.27 eine perspektivische Ansicht eines Transferbogensystems zur Ausrichtung am Patienten zeigt;
Fig. 28 eine perspektivische Ansicht des positionierten Transferbogensystems am Patienten zeigt,
Fig. 29 eine perspektivische Ansicht bei der Herstellung des konstruierten Einprobekörpers in einem CAD/CAM-gesteuerten Fertigungsgerät aus einem Block zeigt,
Fig. 30 eine perspektivische Darstellung des CAD/CAMgesteuerten Fertigungsgerätes bei der Fertigung der Prothesenzähne auf Grundlage der Daten aus dem digitalen Prothesenmodell zeigt,
Fig. 31 eine perspektivische Darstellung der aus einem Block herausgearbeiteten Prothesenzähne zeigt und
Fig. 32ein Ablaufdiagramm mit Schritten zeigt, die bei der Verwendung des erfindungsgemäßen Systems angewendet werden können.

Im Folgenden wird zunächst die Herstellung einer Dentalprothese mit einem erfindungsgemäßen Verfahren und System beschrieben, in denen individualisierte Abformlöffel zum Einsatz kommen.

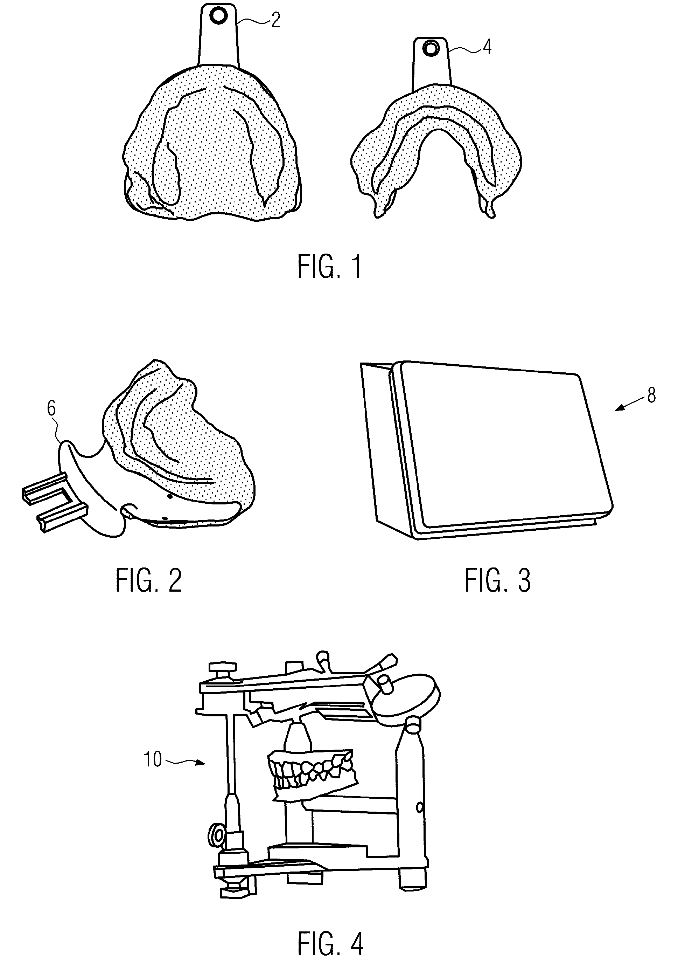

In Fig. 1 ist eine Draufsicht auf Standardabformlöffel 2, 4 gezeigt, mit denen mit darin enthaltenem plastischem Material die Formen von Oberkiefer- und Unterkieferbasis aufgenommen worden sind. In Fig. 2 ist gezeigt, wie mit einem Centric-Tray 6 (Vorrichtung zur Ermittlung der intervestibulären Relation) eine erste Lagebestimmung von Oberkiefer zum Unterkiefer durchgeführt worden ist.

Diese aufgenommenen Formen von Oberkiefer- und Unterkieferbasis werden in einem in Fig. 3 dargestellten Abtastgerät 8 gescannt und digitalisiert in der Datenverarbeitungseinrichtung gespeichert.

In Fig. 4 ist schematisch dargestellt, wie in der Datenverarbeitungseinrichtung die Formen von Oberkiefer- und Unterkieferbasis mittels der durchgeführten Lagebestimmung in einem virtuellen Artikulator positioniert werden, d.h. in dem virtuellen Artikulator werden nach der Positionierung mit dem digitalen Prothesenmodell die Kaubewegungen simuliert.

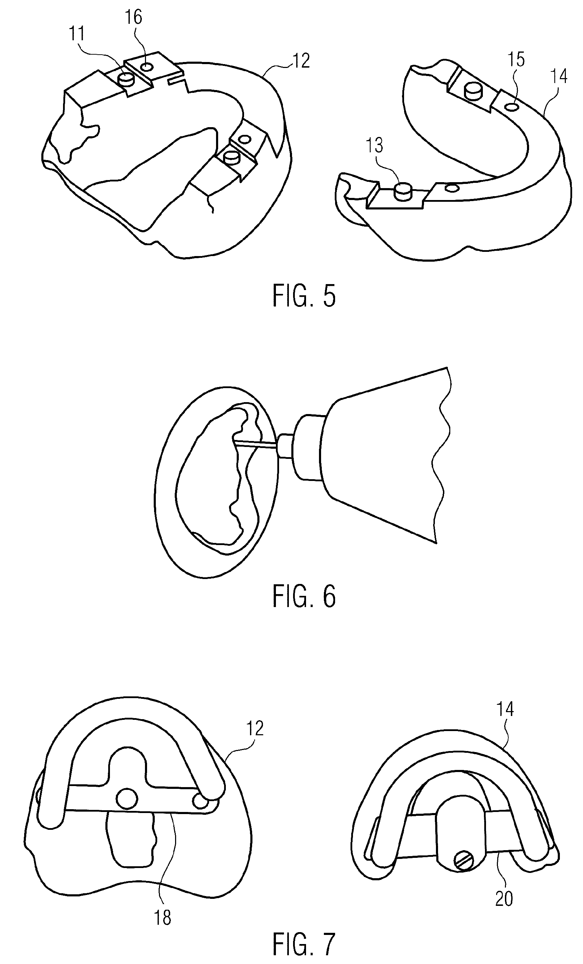

Auf Grundlage des so zunächst gewonnenen digitalen Prothesenmodells werden, wie in Fig. 6 dargestellt, in einem CAD/CAMgesteuerten Fertigungsgerät die individualisierten Abformlöffel 12, 14, im vorliegenden Beispiel durch ein abtragendes Fräsverfahren aus einem Rohling hergestellt. Die hergestellten individualisierten Abformlöffel sind in Fig. 5. dargestellt, worin auch hergestellte Zapfen 11, 13 und Aufnahmevertiefungen 15, 16 zur Aufnahme von Registrierelementen zu sehen sind.

In Fig. 7 sind Draufsichten auf die hergestellten individualisierten Abformlöffel 12 und 14 mit daran befestigten Registrierelementen 18 und 20 gezeigt.

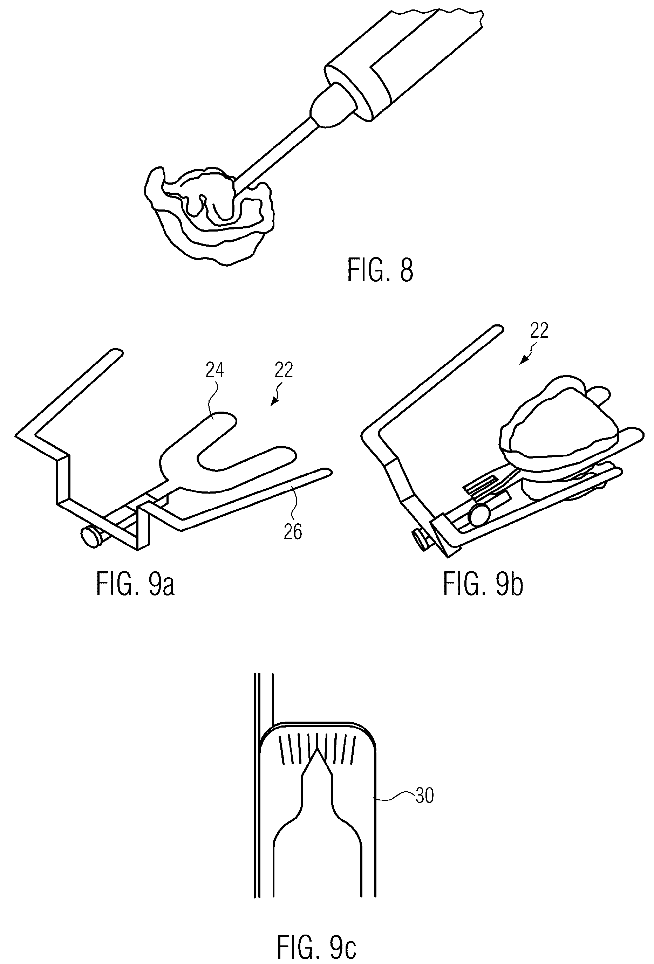

In Fig. 8 ist gezeigt, wie plastisches Material in einen individualisierten Abformlöffel gefüllt wird. Die detaillierten Formen von Oberkiefer- und Unterkieferbasis werden mit den individualisierten Abformlöffeln 12, 14 und darauf befindlichen plastischen Material aufgenommen. Während der Abformung sind die Funktionsbewegungen vom Patienten durchzuführen. Dabei wird auch die Lage der Okklusionsebene bestimmt, wozu ein Okklusionom wie in Fig. 9a dargestellt zum Einsatz kommt. Das Okklusionom 22 hat einen inneren Bissbogen 24, der beim zuletzt genannten Abformvorgang zwischen die individualisierten Abformlöffel 12, 14 eingebracht wird. Der innere Bissbogen 24 ist mit einem äußeren Bogen 26 über Gelenke verbunden, die es erlauben, den äußeren Bogen 26 bei fest lokalisiertem inneren Bissbogen 24 parallel zur Camperschen Ebene zu bringen und den äußeren Bogen 26 parallel zur Bipupillarlinie auszurichten. Damit geht eine Relativbewegung des äußeren Bogens 26 zu dem fest lokalisierten Bissbogen 22 einher, die durch die Gelenke ermöglicht wird. Die relative Lage des inneren Bissbogens 24 bei ausgerichtetem äußeren Bogen 26 kann dann anhand der Verstellung der Gelenke gemessen werden, wozu jedes Gelenk mit einer Skala 30 versehen ist, die die erfolgte Verstellung anzeigt und damit die Lageparameter des inneren Bissbogens 24 relativ zu dem an der Camperschen Ebene ausgerichteten und parallel zur Bipupillarlinie ausgerichteten äußeren Bogens 26 angibt. Die abgelesenen Lageparameter werden als Parameter der Okklusionsebene abgelegt und gespeichert.

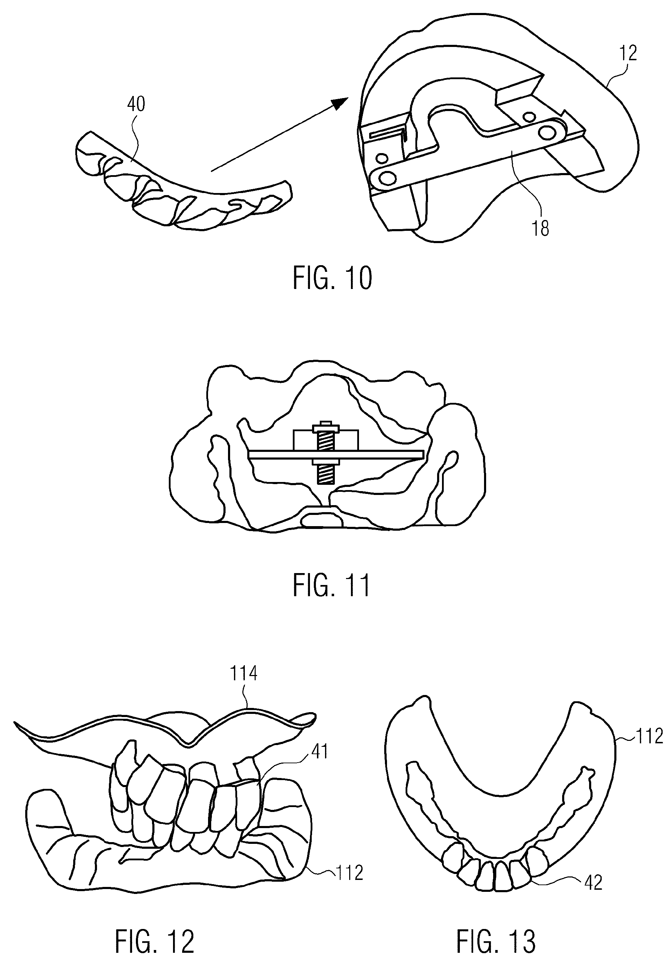

In Fig. 10 ist schematisch dargestellt, wie während der Abformung, also während sich die individualisierten Abformlöffel 12, 14 im Mund des Patienten befinden, aus einem bereitgehaltenen Satz von oberen oder unteren Standard-Frontzahnbögen ein zu dem Patienten passender Standard-Frontzahnbogen 40 ausgewählt wird. In Abhängigkeit von den physiologischen Gegebenheiten wird der ausgewählte Standard-Frontzahnbogen 40 an dem zugehörigen individualisierten Abformlöffel 12 nach den gegebenen physiologischen Gegebenheiten positioniert und mit einem Mittel zum Befestigen an dem Abformlöffel 12 befestigt. Das Mittel zum Befestigen kann zum Beispiel ein Wachsblock, lichthärtendes Material, das nach endgültiger Positionierung ausgehärtet wird, oder ein einstellbarer Mechanismus sein, der in eine dafür vorgesehene Aufnahme an dem individualisierten Abformlöffel eingesteckt wird. In diesem Beispiel enthält der Standard-Frontzahnbogen sechs aneinanderliegende Vorderzähne; grundsätzlich können auch Standard-Frontzahnbögen mit einer anderen Anzahl von Vorderzähnen verwendet werden.

Der Satz von Standard-Frontzahnbögen kann zum Beispiel Frontzahnbögen mit unterschiedlichen Frontzahngrößen (klein-mittelgroß) und unterschiedlichen Frontzahnbogengrößen (weit-mitteleng) enthalten. Jeder Standard-Frontzahnbogen kann zum Beispiel sechs Frontzähne umfassen.

In Fig. 11 ist dargestellt, wie bei der Kieferrelationsbestimmung mittels eines Stützregistrats die exakte vertikale und horizontale Position von Oberkiefer zu Unterkiefer ermittelt wird. Diese Stellung der beiden individualisierten Abformlöffel wird durch ein geeignetes Material im Patientenmund fixiert. Die beiden verbundenen Abformlöffel mit den darin aufgenommenen Formen der in dem plastischen Material aufgenommenen Oberkiefer- und Unterkieferbasis und mit an einem der Abformlöffel befestigten Standard-Frontzahnbogen wird in verbundener, registrierter Bissstellung in eine Abtasteinrichtung 8, wie zum Beispiel in Fig. 3 gezeigt, eingebracht, um durch Abtasten der Form und deren digitalisierte Speicherung einen Ausgangspunkt für das digitale Prothesenmodell zu schaffen. Die digitalisierten Formen von Oberkiefer- und Unterkieferbasis werden in der ermittelten Kieferrelation in dem virtuellen Artikulator, wie in Fig. 10 gezeigt in der Datenverarbeitungseinrichtung mittelwertig positioniert.

Falls bei der Lagebestimmung der Okklusionsebene Abweichungen von der Nullposition der Skala registriert wurden, sind die abweichenden Werte in die Datenverarbeitungseinrichtung einzugeben. Die Position der Okklusionsebene passt sich entsprechend den Vorgaben an.

Der weitere Aufbau und die Verfeinerung des digitalen Prothesenmodells findet nun an der Datenverarbeitungseinrichtung statt, die eine Anzeige des räumlichen digitalen Prothesenmodells wie schematisch in Fig. 12 gezeigt liefert.

Zu dem physisch ausgewählten Standard-Frontzahnbogen, dessen Identifizierung in die Datenverarbeitungseinrichtung eingegeben ist, wird nun von der Datenverarbeitungseinrichtung aus einer Datenbank ein Datensatz mit digitalen Standard-Frontzahnbogen-Formdaten für den ausgewählten Standard-Frontzahnbogen abgerufen. Dieses digitale Modell des ausgewählten Standard-Frontzahnbogens wird dann in das digitale Prothesenmodell so integriert, dass die Position des abgerufenen digitalen Modells aus Standard-Frontzahnbogen-Formdaten relativ zu den digitalisierten Kieferbasisdaten möglichst gut zu der Position der eingescannten Daten des an dem Abformlöffel befestigten Standard-Frontzahnbogens in dem digitalen Prothesenmodell passt. Dies ist in Fig. 12 dadurch angedeutet, dass das digitale Modell 41 des ausgewählten Standard-Frontzahnbogens relativ zu der digitalisierten Oberkieferbasis 114 in verschiedenen Stellungen gezeigt ist, wobei diese Stellungen solange variiert werden, bis eine möglichst gute Übereinstimmung zu den eingescannten Daten des physischen Standard-Frontzahnbogens 40 zu der Oberkieferbasis erreicht ist. Sobald die optimale Positionierung des digitalen Modells des ausgewählten Standard-Frontzahnbogens erreicht ist, wird dieses digitale Modell 41 des ausgewählten Standard-Frontzahnbogens in der richtigen Relativposition zu der Oberkieferbasis 114 in das digitale Prothesenmodell integriert.

Die Datenverarbeitungseinrichtung ist dann weiter dazu eingerichtet, aus der Datenbank mit den digitalen Modellen für die Standard-Frontzahnbögen einen Antagonisten-Standard-Frontzahnbogen abzurufen, der zu dem ausgewählten Standard-Frontzahnbogen passt. Falls mehrere Antagonisten-Frontzahnbögen in der Datenbank als potentiell zu dem ausgewählten Standard-Frontzahnbogen passend deklariert sind, werden diese von der Datenverarbeitungseinrichtung zur Auswahl angezeigt. Anschließend werden die digitalen Modelldaten des ausgewählten Antagonisten-Standard-Frontzahnbogens 42 mit den digitalisierten Daten des digitalen Prothesenmodells der zugehörigen Kieferbasis so zusammengeführt, dass eine optimale Lage/Position mit dem bereits zuvor ausgewählten und in das digitale Prothesenmodell integrierten digitalen Daten des ausgewählten Standard-Frontzahnbogens 41 erzielt wird. Dies ist in Fig. 13 dargestellt, wo ein passender Antagonisten-Standard-Frontzahnbogen in den Unterkiefer des digitalen Prothesenmodells integriert worden ist, nachdem in Fig. 12 die Positionierung des digitalen Modells des ausgewählten Standard-Frontzahnbogens 41 für den Oberkiefer bereits stattgefunden hat.

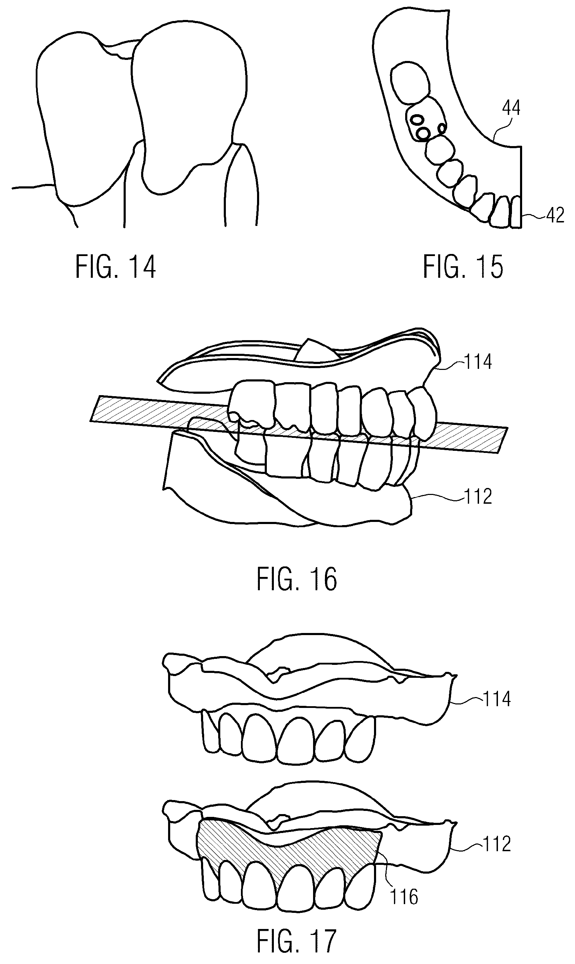

In Fig. 15 ist eine schematische Draufsicht von oben auf die Unterkieferbasis 112 der digitalen Prothese gezeigt. Darin sind die digitalen Standard-Frontzahnbogen-Formdaten 42 bereits integriert. Die Datenverarbeitungseinrichtung ist dazu eingerichtet, nun eine oder mehrere, wenn vorhanden, zu dem bereits integrierten Standard-Frontzahnbogen in der Datenbank als passend deklarierte Backenzahnreihen 44 aus dieser abzurufen. Bei Vorhandensein mehrerer möglicher Backenzahnreihen werden diese dem Benutzer von der Datenverarbeitungseinrichtung zur Auswahl angeboten. Nach Auswahl werden die digitalen Modelldaten der ausgewählten Backenzahnreihe aus der Datenbank abgerufen und in die Kieferbasisdaten der digitalen Prothese unter Berücksichtigung der nach ihrer Lage bereits bestimmten Okklusionsebene eingepasst. Figur 14 zeigt einen seitlichen Kontaktpunkt von der Backenzahnreihe zum Frontzahnbogen, wobei jeweils nur der letzte am Kontaktpunkt liegende Zahn aus der Backenzahnreihe und dem Frontzahnbogen gezeigt ist.

So werden aufeinanderfolgend die Zahndaten aller Zähne in ihrer Position in die digitale Prothese eingepasst. Eine Funktionskontrolle der Positionierung erfolgt mit dem digitalen Artikulator. Die Datenverarbeitungseinrichtung ist dazu eingerichtet, dabei funktionelle Störkontakte in der Okklusion sowie der Okklusionsbewegung zu erkennen und zu speichern. Störkontakte können später vom Anwender schleiftechnisch entfernt werden.

Wie in Fig. 17 gezeigt, wird von der Datenverarbeitungseinrichtung eine graphische Darstellung des digitalen Prothesenmodells entsprechend den Vorgaben der Kieferbasisdaten und der Zahnaufstellung wie in Fig. 17 oben dargestellt gezeigt. Die Datenverarbeitungseinrichtung stellt ferner ein sogenanntes "digitales Wachsmesser" als Programmfunktion bereit. Mit diesem kann ein Anwender in der graphischen Darstellung die Form des Zahnfleisches gestalten, indem das digitale Wachsmesser in der graphischen Darstellung die gewünschte Gestaltung erzeugt. Die gewünschte Gestaltung des Zahnfleisches 116 ist in Fig. 17 in der unteren Darstellung gezeigt. Die so von dem Anwender erzeugte Gestaltung des Zahnfleisches wird in das digitale Prothesenmodell übernommen.

Ferner wird von der Datenverarbeitungseinrichtung eine Mehrzahl von vorgegebenen Oberflächentexturen zur Auswahl bereitgestellt, die der Anwender auswählen und auf ausgewählte Bereiche der Oberflächen des digitalen Prothesenmodells übertragen kann, wonach diese in das digitale Prothesenmodell übernommen werden.

Zur weiteren Gestaltung der Gingiva werden von der Datenverarbeitungseinrichtung dem Anwender eine Anzahl von Gingiva-Parametern zur Spezifizierung angeboten. Dazu gehören:
1. gingivale Fassung der Zahnlängen der aufgestellten Zähne, d.h. die Tiefe der Kavität in der Kieferbasis, die die Zahnbasis aufnimmt,
2. Mindestwandstärke von Oberkiefer- und Unterkieferbasis, d.h. die minimale Stärke der unter einer Kavität verbleibenden Wanddicke der Basis,
3. Oberflächentexturparameter der Gaumenoberfläche, und
4. Geometrieparameter des Übergangsbereichs von Prothesenbasiskörper zum Zahn in der Kavität. Mit den letzteren Geometrieparametern kann der Anwender den Übergangsbereich von der Prothesenbasisoberfläche zu einer Kavität gestalten, zum Beispiel eine Abrundung vorsehen.

Durch eine Abrundung oder Abschrägung am oberen Rand weitet sich die Kavität am oberen Rand leicht auf. Dadurch entsteht ein leicht erweiterter Rand um die Zahnbasis im Übergangsbereich zur Prothesenbasisoberfläche, wobei dieser erweiterte Übergangsbereich beim Einkleben der Kunstzähne mit Klebstoff gefüllt wird. Bei Verwendung von antibakteriellen Zusätzen in den Klebstoffen kann so ein verbesserter Schutz gegen Eindringen oder Festsetzen von Bakterien im Übergangsbereich von Zahnbasis und Zahnkavität der Prothesenbasis gesorgt werden.

Eine Berücksichtigung und Einhaltung einer Mindestwandstärke von Oberkiefer- und Unterkieferbasis im Bereich der Kavitäten ist notwendig, um eine minimale Festigkeit des Prothesenbasiskörpers auch im Bereich der Kavitäten sicherzustellen.

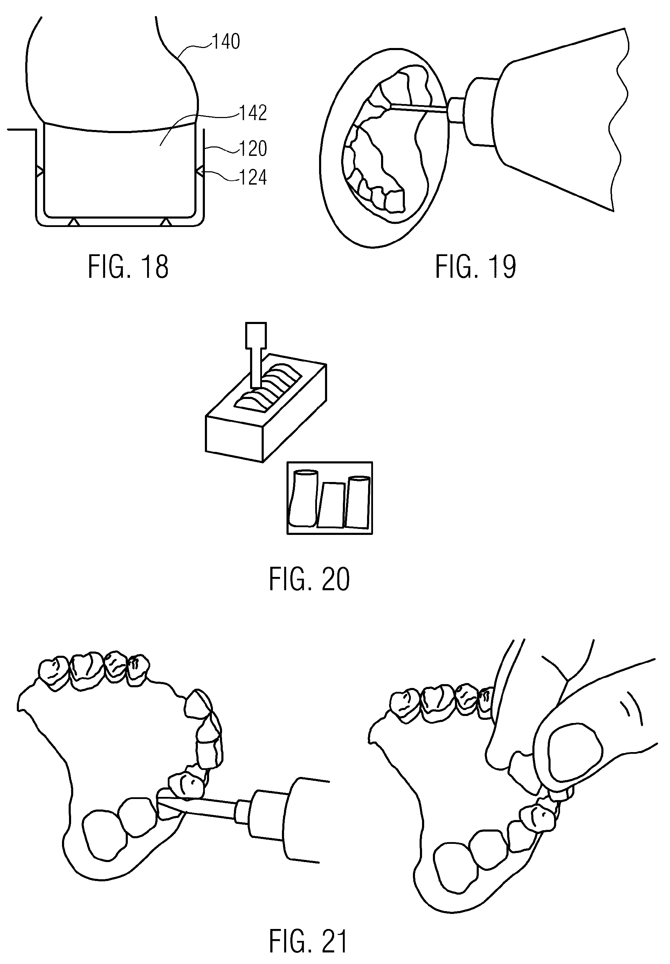

Ferner werden von der Datenverarbeitungseinrichtung Zahnkavitätsparameter zur Spezifizierung durch den Anwender abgefragt. Dazu gehören Positionierung, Anzahl und Größe von Abstandshaltern 124 in einer Kavität 120, wie in Fig. 18 gezeigt. Diese Abstandshalter 124 an den Innenwänden der Kavität 120 sorgen dafür, dass die Zahnbasis 142 eines in die Kavität 120 eingesetzten Kunstzahns 140 sicher positioniert in der Kavität 120 gehalten wird, während gleichzeitig ein definierter Zwischenraum zwischen der Außenfläche der Zahnbasis 142 und der Innenwand der Kavität 120 verbleibt, so dass ein definierter Zwischenraum zur Aufnahme von Klebstoff bereitgestellt wird. Auf dieser Weise erhält man bei der Positionierung des Kunstzahns in der Kavität der Prothesenbasis einen gleichmäßig breiten Klebspalt um die Zahnbasis 142 in der Kavität 120. Grundsätzlich kann auch die Breite des Klebestreifens zu den zu spezifizierenden Zahnkavitätsparametern gehören. Die spezifizierten Zahnkavitätsparameter werden dann für alle Zahnkavitäten in das digitale Prothesenmodell übernommen.

Wenn in der Datenverarbeitungseinrichtung bei der Berechnung der Kavitäten festgestellt wird, dass die verbleibende Wandstärke der Prothesenbasis unter der Kavität die vorgegebene Mindestwandstärke unterschreiten würde, speichert die Datenverarbeitungseinrichtung für den für diese Kavität vorgesehenen Kunstzahn eine so verkürzte Länge, um die vorgegebene Mindestwandstärke unter der Kavität zu erhalten. Im Fall von der Verwendung von konfektionierten Kunststoffzähnen wird die zu kürzende Länge des konfektionieren Kunststoffzahns dann zur Steuerung eines automatisierten Fräsgerätes benutzt, in das der konfektionierte Kunststoffzahn eingesetzt und auf die verkürzte Länge eingekürzt wird. Dieser Vorgang ist schematisch in Fig. 20 gezeigt.

Nachdem alle Daten und Parameter in dem digitalen Prothesenmodell spezifiziert und festgelegt sind, steuert die Datenverarbeitungseinrichtung nach Maßgabe dieses digitalen Prothesenmodells eine CAD/CAM-gesteuerte Fertigungsmaschine, zum Beispiel eine Fräsmaschine, in der aus einem Block bestehend aus zahnfleischfarbenem Kunststoffmaterial der konstruierte Prothesenbasiskörper im abtragenden Verfahren hergesellt wird, wobei in Fig. 19 die Bearbeitung des Prothesengrundkörpers mit einer automatisch gesteuerten Fräse gezeigt ist. Die Fertigung der Prothesenbasiskörper kann alternativ auch in einem aufbauenden Verfahren erfolgen.

Anschließend werden die Prothesenzähne in die Kavitäten der gefertigten Prothesenbasiskörper mittels eines Fügemediums eingeklebt, wie in Fig. 21 gezeigt.

Um die Kunstzähne dauerhaft in den Kavitäten zu verkleben, ist eine korrekte Positionierung notwendig. Dabei ist jeder Zahn oder jede Zahngruppe einzeln und manuell auf die korrekte Passung in der Kavität zu kontrollieren und anschließend einzukleben. Als Kontrollinstrument ist eine Transferschablone zu verwenden, die zusätzlich beim Verkleben der Einzelzähne und/oder Zahnreihe als Übertragungsinstrument verwendet werden kann. Diese Transferschablone ist eine mit einer CAD/CAM-Fertigungsmaschine hergestellte Negativform der Zahngruppe. So ist eine sichere und korrekte Positionierung gewährleistet. Die Zähne und/oder Zahngruppen werden in der Schablone positioniert und beim Verkleben in die Kavitäten des Prothesenbasiskörpers übertragen. Die abschließende Politur erfolgt klassisch an einer Poliereinheit. Die Prothesenbasiskörper müssen geglättet und frei von Graten sein, die Prothesenränder sind rund und keinesfalls scharfkantig auszuarbeiten.

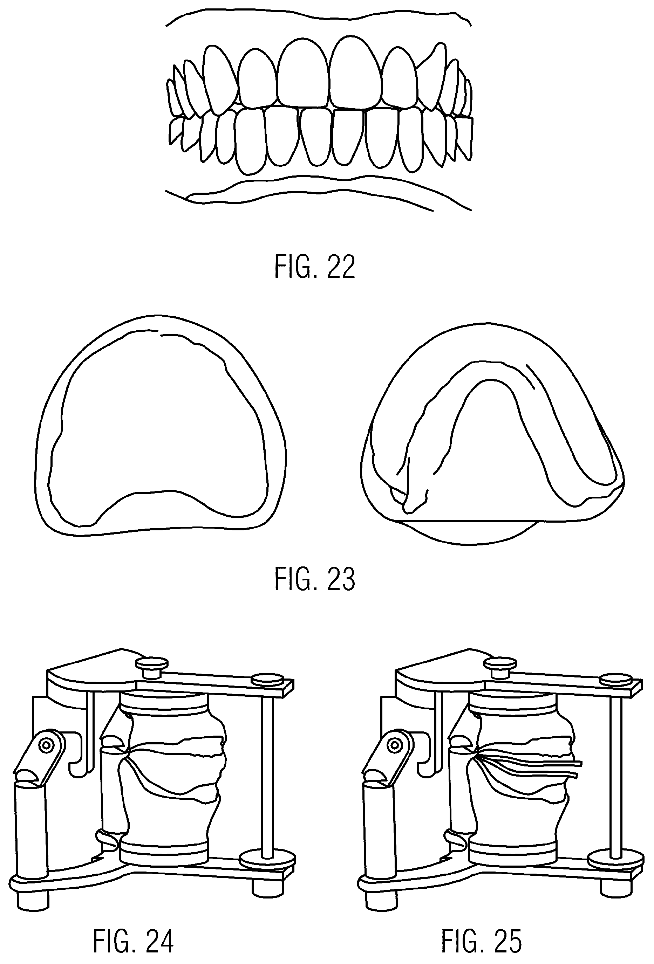

Fig. 22 illustriert die funktionelle und ästhetische Kontrolle der fertigenden Teilprothese im Patientenmund.

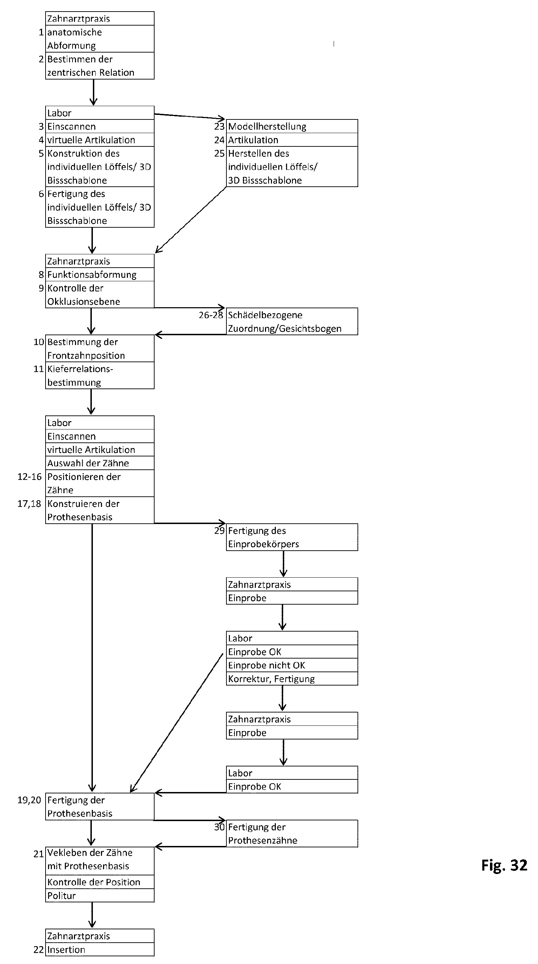

Figur 32 zeigt ein Ablaufdiagramm mit Schritten, die bei Verwendung des erfindungsgemäßen Systems angewendet werden können. In dem linken Zweig sind die Schritte nach der bis hierher anhand der Figuren 1 bis 22 beschriebenen Verfahrensweise aufgeführt, wobei an den Blöcken der Ablaufschritte Zahlen angegeben sind, die den Nummern der diese Schritte illustrierende Figuren 1 bis 22 in der vorhergehenden Figurenbeschreibung entsprechen. Die in den rechten Zweigen aufgeführten Schritte 23 bis 30 sind optional zusätzliche oder alternativ mögliche Schritte innerhalb des Prozesses, die an den dargestellten Prozessschritten ausgeführt werden können. Diese Schritte 23 bis 30 werden im Folgenden anhand der diese Schritte illustrierenden Figuren 23 bis 30 beschrieben.

Fig. 23 zeigt die hergestellten Situationsmodelle. Deren Herstellung erfolgt standardmäßig mit Dentalgips der Klasse 3.

Wie in Fig. 24 gezeigt werden die Modelle von Oberkiefer- und Unterkieferbasis mittelwertig in den Artikulator eingesetzt. Mit der durchgeführten Lagebestimmung mittels Centric Tray ist eine Positionierung von Oberkiefer und Unterkiefer möglich.

Wie in Fig. 25 gezeigt wird auf der Basis der so erhaltenen Informationen ein individualisierter Abformlöffel aus lichthärtendem oder autopolymerisierendem Löffelmaterial hergestellt. Dabei werden die Registrierelemente direkt mit einpolymerisiert.

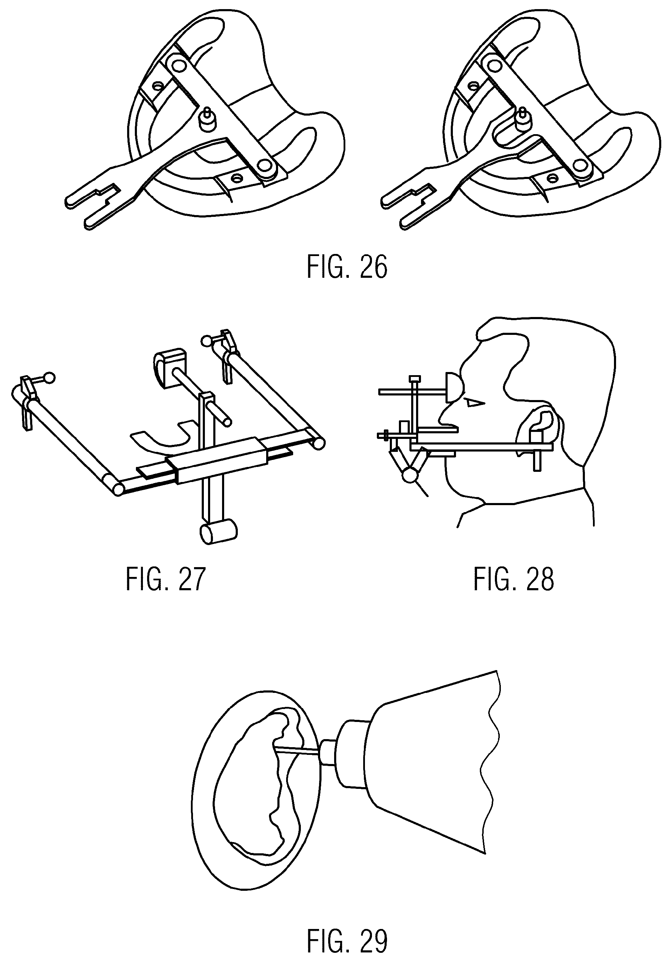

Wie in Fig. 26 gezeigt befindet sich an dem Registrierelement 18 des individualisierten Abformlöffels 12 eine Aufnahme/Schnittstelle für das Registriergelenk zur Schädel-/gelenkbezogenen Zuordnung der Ober- und Unterkieferbasis. Alternativ kann auch das Registrierelement selbst ausgetauscht werden.

Fig. 27 zeigt ein Transferbogensystem. Ist das Transferbogensystem am Patienten ausgerichtet, werden die Feststellschrauben am Registriergelenk fixiert. Fig. 28 zeigt die Situation bei der Einstellung am Patienten.

Die individuelle Position des Registriergelenks wird durch Scannen digitalisiert. So kann die Lageposition von Ober- und Unterkieferbasis Patienten individuell im virtuellen Artikulator wiedergegeben werden.

In Fig. 29 ist dargestellt, wie in einer CAD/CAM-gesteuerten Fertigungsmaschine aus einem Block der konstruierte Einprobekörper im abtragenden Verfahren gefertigt wird. Die Prothesenzähne werden anschließend provisorisch in den Kavitäten verklebt.

Alternativ kann die gesamte Einprobe-Prothese (Prothesenbasiskörper inklusive Prothesenzähne) in einem Stück gefertigt werden.

Die funktionelle und ästhetische Kontrolle der Einprobe-Prothese erfolgt im Patientenmund.

Nach der Einprobe erfolgt gegebenenfalls eine Korrektur der Zahnposition/-lage und gegebenenfalls erneutes Digitalisieren in der Abtasteinrichtung und Speicherung der geänderten Situation in der Datenverarbeitungseinrichtung.

Nach der Korrektur kann die permanente Dentalprothese oder ein weiterer Einprobekörper gefertigt werden.

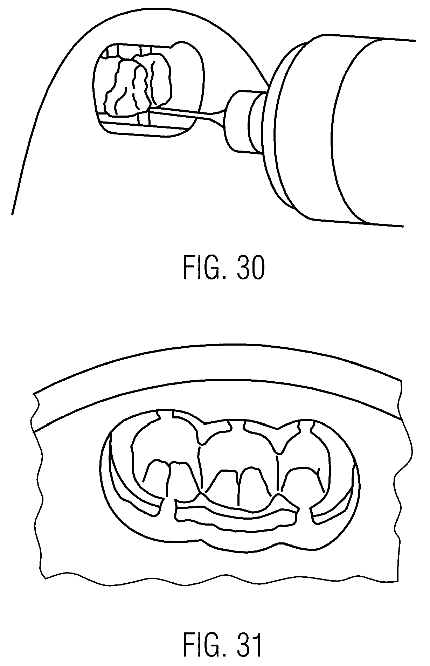

In einer von der Datenverarbeitungseinrichtung gesteuerten CAD/CAM-Fertigungsmaschine erfolgt die Fertigung der Kunstzähne nach Maßgabe des digitalen Prothesenmodells im abtragenden oder aufbauenden Verfahren, wobei in Fig. 30 eine abtragende Fertigung illustriert ist. Die aus einem Block herausgearbeiteten Prothesenzähne, die über Stützstege noch mit dem Block verbunden sind, sind in Figur 31 dargestellt.

Die in der Datenverarbeitungseinrichtung definierten Gingiva-Parameter werden bei der Fertigung der Prothesenzähne automatisch berücksichtigt. Eine nachträgliche Reduzierung der Zahnlänge ist bei diesem Verfahren nicht notwendig.

### Bezugszeichenliste

- 2, 4: Standardabformlöffel
- 6: Centric Tray
- 8: Abtasteinrichtung
- 10: Virtueller Artikulator
- 12, 14: Individualisierter Abformlöffel
- 11, 13: Zapfen zum Aufstecken von Registrierelementen
- 15, 16: Aufnahmen zum Einstecken von Registrierelementen
- 18, 20: Registrierelemente
- 22: Okklusionom
- 24: Innerer Bissbogen
- 26: Äußerer Bogen
- 28: Gelenke des Okklusionoms
- 30: Skala des Okklusionoms
- 40: Standard-Frontzahnbogen
- 41: Digitale Standard-Frontzahnbogen-Formdaten
- 42: Digitale Antagonisten-Standard-Frontzahnbogen-Formdaten
- 44: Digitale Backenzahnreihen-Formdaten
- 112: Unterkieferbasis im digitalen Prothesenmodell
- 114: Oberkieferbasis im digitalen Prothesenmodell
- 116: Zahnfleisch im digitalen Prothesenmodell
- 120: Kavität
- 124: Abstandshalter
- 140: Kunstzahn
- 142: Zahnbasis

## Patentansprüche

1. Verfahren zum Aufbau einer Dentaltotalprothese, bei dem
die Formen von Oberkiefer- und Unterkieferbasis mit plastischem Material mit Standardabformlöffeln (2, 4) oder mit individualisierten Abformlöffeln (12, 14) aufgenommen werden, die auf Grundlage einer vorhergehenden Erfassung der Formen mit Standardformlöffeln oder durch Erfassung der Formen durch digitales Scannen und/oder fototechnische Erfassung individuell an den Kiefer des Patienten angepasst hergestellt worden sind,
bei der Aufnahme der Formen von Oberkiefer- und Unterkieferbasis die Lage der Okklusionsebene mit einem Okklusionom (22) durch Ausrichten parallel zur Bipupillarlinie und zur Camperschen Ebene relativ zu Oberkiefer- und Unterkieferbasis erfasst und digital gespeichert wird,
die Formen der in dem plastischen Material aufgenommenen Oberkiefer- und Unterkieferbasis digitalisiert und in einer Datenverarbeitungseinrichtung als digitales Prothesenmodell gespeichert werden,
die Oberkiefer- und Unterkiefer-Prothesenbasen nach Maßgabe des digitalen Prothesenmodells aus Dentalmaterialien durch abtragende oder aufbauende Verfahren erstellt werden,
**dadurch gekennzeichnet, dass**
beim Aufnehmen der Formen von Ober- und Unterkieferbasis mit plastischem Material aus einem bereitgehaltenen Satz von oberen oder unteren Standard-Frontzahnbögen (40) ein passender ausgewählt und in der gewünschten Position an dem Abformlöffel mit dem darin in dem plastischen Material abgeformten Ober- oder Unterkieferboden befestigt wird,
zur Bildung eines Ausgangspunkts für das digitale Prothesenmodell die Formen der in dem plastischen Material in den Abformlöffeln aufgenommenen Oberkiefer- und Unterkieferbasis mit dem an dem Abformlöffel befestigten Standard-Frontzahnbogen in registrierter Bissstellung durch Scannen digitalisiert und gespeichert werden,
aus einer Datenbank, die digitale Frontzahnbogen-Formdaten (41) für alle Standard-Frontzahnbögen und weitere Zahnbögen enthält, die den ausgewählten Standard-Frontzahnbogen (40) beschreibenden Standard-Frontzahnbogen-Formdaten abgerufen und mit den Daten der zugehörigen Kieferbasis in dem digitalen Prothesenmodell so integriert werden, dass die Position der digitalen Standard-Frontzahnbogen-Formdaten relativ zu den digitalisierten Kieferbasisdaten möglichst gut mit der Position des an dem Abformlöffel befestigen Standard-Frontzahnbogens relativ zu der abgeformten Kieferbasis übereinstimmt.

2. Verfahren nach Anspruch 1, **dadurch gekennzeichnet, dass** von der Datenverarbeitungseinrichtung aus der Datenbank ein zu dem ausgewählten Standard-Frontzahnbogen für Ober- oder Unterkiefer passender Antagonisten-Standard-Frontzahnbogen (42) in Form von digitalen Antagonisten-Standard-Frontzahnbogen-Formdaten abgerufen und mit den digitalisierten Daten der zugehörigen Kieferbasis in dem digitalen Prothesenmodell so zusammengeführt wird, dass eine optimale Passung mit dem ausgewähltem und positionierten Frontzahnbogen erzielt wird.

3. Verfahren nach einem der vorhergehenden Ansprüche, **dadurch gekennzeichnet, dass** von der Datenverarbeitungseinrichtung nach Integration der Standard-Frontzahnbogen-Formdaten und gegebenenfalls Antagonisten-Standard-Frontzahnbogen-Formdaten in das digitale Prothesenmodell eine oder mehrere zu dem ausgewählten Standard-Frontzahnbogen passende Backenzahnreihen zur Auswahl angeboten und nach Auswahl diese beschreibende digital Backzahnreihen-Formdaten (44) aus der Datenbank abgerufen und mit den digitalisierten Kiefernbasisdaten im Anschluss passend zu den bereits integrierten Standard-Frontzahnbogen-Formdaten in das digitale Prothesenmodell eingepasst werden.

4. Verfahren nach einem der vorhergehenden Ansprüche, **dadurch gekennzeichnet, dass** mit der Datenverarbeitungseinrichtung eine graphische Darstellung des digitalen Prothesenmodells erzeugt und ein digitales Wachsmesser als Programmfunktion bereitgestellt wird, um einem Benutzer das Design des Zahnfleisches (116) und der Prothesenbasenoberflächen mit dem digitalen Wachsmesser in der graphischen Darstellung des digitalen Prothesenmodells zu ermöglichen, und die so vorgenommenen Gestaltungen in das digitale Prothesenmodell übernimmt.

5. Verfahren nach einem der vorhergehenden Ansprüche, **dadurch gekennzeichnet, dass** von der Datenverarbeitungseinrichtung eine Mehrzahl von vorgegebenen Oberflächentexturen zur Auswahl bereitgestellt werden, die nach Auswahl auf ausgewählte Bereiche der Oberflächen des digitalen Prothesenmodells übertragbar sind.

6. Verfahren nach einem der vorhergehenden Ansprüche, **dadurch gekennzeichnet, dass** von der Datenverarbeitungseinrichtung wenigstens ein Gingiva-Paramter zur Spezifizierung abgefragt wird, wozu wenigstens einer der folgenden Gingiva-Paramter gehört: Gingivale Fassung der Zahnlängen der aufgestellten Zähne, Mindestwandstärke von Oberkiefer- und Unterkieferbasis, Oberflächentexturparameter der Gaumenoberfläche und Geometrieparameter des Übergangsbereichs von Prothesenkörper zum Zahn, wobei die eingegebenen Gingiva-Parameter in das digitale Prothesenmodell übernommen werden.

7. Verfahren nach einem der vorhergehenden Ansprüche, **dadurch gekennzeichnet, dass** von der Datenverarbeitungseinrichtung wenigstens ein Zahnkavitätsparameter zur Spezifizierung abgefragt wird, wozu die Breite des Klebespaltes zwischen Innenwand der Zahnkavität und eingeführter Zahnbasis und Ort und Anzahl von Abstandshaltern an der Innenwand der Zahnkavität zur definierten Positionierung der Zahnbasis des eingeführten Zahns mit einem gleichmäßig breiten Klebespalt gegenüber den Innenflächen der Zahnkavität gehören, und die spezifizierten Zahnkavitätsparameter für alle Zahnkavitäten in das digitale Prothesenmodel übernommen werden.

8. Verfahren nach einem der vorhergehenden Ansprüche, **dadurch gekennzeichnet, dass** in der Datenverarbeitungseinrichtung, wenn bei der Berechnung der Kavitäten für konfektionierte Kunststoffzähne festgestellt wird, dass die verbleibende Wandstärke der Prothesenbasis unter der Kavität eine vorgegebene Mindestwandstärke unterschreiten würde, gespeichert wird, auf welche Länge der Kunststoffzahn zu reduzieren ist, um die vorgegebene Mindestwandstärke unter der Kavität zu erhalten, die Kavität an die reduzierte Länge des Kunststoffzahns angepasst in dem digitalen Prothesenmodell gespeichert wird, und der Kunststoffzahn in einer Fräseinrichtung unter Steuerung der Datenverarbeitungseinrichtung auf die gespeicherte reduzierte Länge des Kunststoffzahns verkürzt wird.

9. Verfahren nach einem der vorhergehenden Ansprüche, **dadurch gekennzeichnet, dass** die Datenverarbeitungseinrichtung ein Auswahlmenü für künstliche Zähne aus unterschiedlichen Materialtypen bereitstellt, in dem für jede Zahnposition eine Materialauswahl aus Dentalmaterialien möglich ist, wobei in der Datenverarbeitungseinrichtung der ausgewählte Materialtyp bei der Berechnung der Kavitäten in den Prothesenbasen berücksichtigt wird.

10. Verfahren nach einem der vorhergehenden Ansprüche, **dadurch gekennzeichnet, dass** zur Bestimmung der Lage der Okklusionsebene ein Okklusionom mit einem inneren Bissbogen und einem über Gelenke daran angebrachten äußeren Bogen verwendet wird, der innere Bogen zwischen die Standardabformlöffel oder die individualisierten Abformlöffel eingebracht wird und wahlweise über eine Schnittstelle an dem oberen und/oder unteren Abformlöffel befestigt werden, der äußere Bogen durch Verschwenken der Gelenke in Ausrichtung parallel zur Camperschen Ebene und parallel zur Bipupillarlinie eingestellt wird, und die sich ergebenden Abweichungen der Parallelität des inneren Bissbogens von der des ausgerichteten äußeren Bogens an den Skalen an den Gelenken abgelesen und gespeichert wird.

11. System zum Aufbau einer Dentaltotalprothese, mit
Standardabformlöffeln (2, 4) oder individualisierten Abformlöffeln (12, 14) zum Aufnehmen der Formen von Oberkiefer- und Unterkieferbasis mit plastischem Material, wobei die individualisierten Abformlöffeln auf Grundlage einer vorhergehenden Erfassung der Formen mit Standardformlöffeln oder durch Erfassung der Formen durch digitales Scannen und/oder fototechnische Erfassung individuell an den Kiefer des Patenten angepasst hergestellt worden sind,
einem Okklusionom (22) zum Erfassen der Lage der Okklusionsebene durch Ausrichten parallel zur Bipupillarlinie und zur Camperschen Ebene bei der Aufnahme der Formen von Oberkiefer- und Unterkieferbasis und einem Speicher zur Speicherung der digitalisierten Lage der Okklusionsebene relativ zur Oberkiefer- und Unterkieferbasis,
einer Abtastungseinrichtung (8) zum Erfassen und Digitalisieren der Formen der in dem plastischen Material aufgenommenen Oberkiefer- und Unterkieferbasis,
einer Datenverarbeitungseinrichtung zum Speichern der digitalisierten Formen von Oberkiefer- und Unterkieferbasis als digitales Prothesenmodell,
einem Fertigungsgerät zum Erstellen der Oberkiefer- und Unterkiefer-Prothesenbasen nach Maßgabe des digitalen Prothesenmodells aus Dentalmaterialien unter Steuerung der Datenverarbeitungseinrichtung durch abtragende oder aufbauende Verfahren,
**dadurch gekennzeichnet, dass**
ein Satz von oberen oder unteren Standard-Frontzahnbögen (40) zur Auswahl und Mittel zum Befestigen eines ausgewählten Standard-Frontzahnbogens in der gewünschten Position an dem Abformlöffel mit dem darin in dem plastischen Material abgeformten Ober- oder Unterkieferboden vorhanden sind,
die Abtastungseinrichtung dazu eingerichtet ist, zur Bildung eines Ausgangspunkts für das digitale Prothesenmodell die Formen der in dem plastischen Material in den Abformlöffeln aufgenommenen Oberkiefer- und Unterkieferbasis mit dem an dem Abformlöffel befestigten Standard-Frontzahnbogen (40) in registrierter Bissstellung durch Scannen zu digitalisieren und zu speichern,
die Datenverarbeitungseinrichtung dazu eingerichtet ist, aus einer Datenbank, die digitale Standard-Frontzahnbogen-Formdaten (41) für alle Standard-Frontzahnbögen enthält, die den ausgewählten Standard-Frontzahnbogen beschreibenden Standard-Frontzahnbogen-Formdaten abzurufen und mit den Daten der zugehörigen Kieferbasis in dem digitalen Prothesenmodell so zu integrieren, dass die Position der digitalen Standard-Frontzahnbogen-Formdaten relativ zu den digitalisierten Kieferbasisdaten möglichst gut mit der eingescannten digitalisierten Position des an dem Abformlöffel befestigen Standard-Frontzahnbogens relativ zu der abgeformten Kieferbasis übereinstimmt.

12. System nach Anspruch 11, **dadurch gekennzeichnet, dass** die Datenverarbeitungseinrichtung dazu eingerichtet ist, für den ausgewählten Standard-Frontzahnbogen (40) für Ober- oder Unterkiefer aus der Datenbank einen dazu passenden Antagonisten-Standard-Frontzahnbogen in Form von digitalen Antagonisten-Standard-Frontzahnbogen-Formdaten (42) abzurufen und mit den digitalisierten Daten der zugehörigen Kieferbasis in dem digitalen Prothesenmodell so zusammenzuführen, dass eine optimale Passung mit dem ausgewählten Standard-Frontzahnbogen erzielt wird.

13. System nach Anspruch 11 oder 12, **dadurch gekennzeichnet, dass** die Datenverarbeitungseinrichtung dazu eingerichtet ist, nach Integration der Standard-Frontzahnbogen-Formdaten (41) und gegebenenfalls der Antagonisten-Standard-Frontzahnbogen-Formdaten (42) in das digitale Prothesenmodell eine oder mehrere zu dem ausgewählten Standard-Frontzahnbogen passende Backenzahnreihen zur Auswahl anzubieten und nach Auswahl diese beschreibende digitale Backenzahnreihe-Formdaten (44) aus der Datenbank abzurufen und mit den digitalisierten Kieferbasisdaten passend zu den bereits integrierten Standard-Frontzahnbogen-Formdaten in das digitale Prothesenmodell einzupassen.

14. System nach einem der Ansprüche 11 bis 13, **dadurch gekennzeichnet, dass** die Datenverarbeitungseinrichtung dazu eingerichtet ist, eine graphische Darstellung des digitalen Prothesenmodells auf einer Anzeige zu erzeugen und ein digitales Wachsmesser als Programmfunktion bereitzustellen, um einem Benutzer das Design des Zahnfleisches und der Prothesenbasenoberflächen mit dem digitalen Wachsmesser in der graphischen Darstellung des digitalen Prothesenmodells zu ermöglichen, und die vorgenommenen Gestaltungen in das digitale Prothesenmodell zu übernehmen.

15. System nach einem der Ansprüche 11 bis 14, **dadurch gekennzeichnet, dass** die Datenverarbeitungseinrichtung dazu eingerichtet ist, eine Mehrzahl von vorgegebenen Oberflächentexturen zur Auswahl bereitzustellen und diese nach Auswahl auf ausgewählte Bereiche der Oberflächen des digitalen Prothesenmodells übertragbar zu machen und diese in das digitale Prothesenmodell zu übernehmen.

16. System nach einem der Ansprüche 11 bis 15, **dadurch gekennzeichnet, dass** die Datenverarbeitungseinrichtung dazu eingerichtet ist, wenigstens einen Gingiva-Parameter zur Spezifizierung abzufragen, wozu wenigstens einer der folgenden Gingiva-Parameter gehört: gingvale Fassung der Zahnlängen der aufgestellten Zähne, Mindestwandstärke von Oberkiefer- und Unterkieferbasis, Oberflächentexturparameter der Gaumenoberfläche und Geometrieparameter des Übergangsbereichs von Prothesenkörper zum Zahn, wobei die Datenverarbeitungseinrichtung dazu eingerichtet ist, eingegebene Gingiva-Parameter in das digitale Prothesenmodell zu übernehmen.

17. System nach einem der Ansprüche 11 bis 16, **dadurch gekennzeichnet, dass** die Datenverarbeitungseinrichtung dazu eingerichtet ist, wenigstens einen Zahnkavitätsparameter zur Spezifizierung abzufragen, wozu die Breite des Klebespaltes zwischen Innenwand der Zahnkavität und eingeführter Zahnbasis und Ort und Anzahl von Abstandshaltern an der Innenwand der Zahnkavität zur definierten Positionierung der Zahnbasis des eingeführten Zahns mit einem gleichmäßig breiten Klebespalt gegenüber den Innenflächen der Zahnkavität gehören, und die spezifizierten Zahnkavitätsparameter für alle Zahnkavitäten in das digitale Prothesenmodell zu übernehmen.

18. System nach einem der Ansprüche 11 bis 17, **dadurch gekennzeichnet, dass** die Datenverarbeitungseinrichtung dazu eingerichtet ist, wenn bei der Berechnung der Kavitäten für konfektionierte Kunststoffzähne festgestellt wird, dass die verbleibende Wandstärke der Prothesenbasis unter der Kavität eine vorgegebene Mindestwandstärke unterscheiden würde, zu speichern, auf welche Länge der Kunststoffzahn zu reduzieren ist, um die vorgegebene Mindestwandstärke unter der Kavität einzuhalten, die Kavität an die reduzierte Länge des Kunststoffzahns anzupassen und in dem digitalen Prothesenmodell abzuspeichern und eine Fräseinrichtung so zu steuern, dass der konfektionierte Kunststoffzahn auf die gespeicherte reduzierte Länge des Kunststoffzahns verkürzt wird.

19. System nach einem der Ansprüche 11 bis 18, **dadurch gekennzeichnet, dass** die Datenverarbeitungseinrichtung dazu eingerichtet ist, ein Auswahlmenü für künstliche Zähne aus unterschiedlichen Materialien bereitzustellen, in dem für jede Zahnposition eine Materialauswahl aus Dentalmaterialien möglich ist, wobei die Datenverarbeitungseinrichtung dazu eingerichtet ist, den ausgewählten Materialtyp bei der Berechnung der Kavitäten in dem Prothesenbasen zu berücksichtigen, um in jedem Fall den für den jeweiligen Materialtyp optimal dimensionierten Klebespalt zu erhalten.

20. System nach einem der Ansprüche 11 bis 19, **dadurch gekennzeichnet, dass** das Okklusionom (22) einen inneren Bissbogen (24) und einen über Gelenke daran angebrachten äußeren Bogen (26) aufweist, wobei die Gelenke mit Skalen (30) versehen sind, so dass nach Verschwenken des äußeren Bogens in Ausrichtung parallel zur Campersche Ebene und parallel zur Bipupillarlinie die sich ergebene Abweichung der Parallelität des inneren Bissbogens von der des ausgerichteten äußeren Bogens an den Skalen an den Gelenken ablesbar ist.

## Claims

1. Method for the construction of a total dental prosthesis, wherein
the shapes of upper and lower jaw bases are taken with plastic material using standard impression trays (2, 4) or individualized impression trays (12, 14), which have been produced in a manner individually adapted to the patient's jaw on the basis of prior acquisition of the shapes using standard impression trays or by acquiring the shapes by digital scanning and/or phototechnical acquisition,
when taking the shapes of the upper and lower jaw bases, the position of the occlusal plane relative to the upper and lower jaw bases is acquired with a bite fork (22) by alignment parallel to the bipupillar line and the Camper plane and is digitally stored,
the shapes of the upper and lower jaw bases taken in the plastic material are digitized and stored as a digital prosthesis model in a data-processing device,
the upper and lower jaw prosthesis bases are produced from dental materials according to the digital prosthesis model by ablative or constructive methods,
**characterized in that**
when taking the shapes of the upper and lower jaw bases with plastic material, a suitable one of a prepared set of upper or lower standard front dental arches (40) is selected and fastened in the desired position on the impression tray with the upper or lower jaw base impressed therein in the plastic material,
in order to form a starting point for the digital prosthesis model, the shapes of the upper and lower jaw bases taken in the plastic material in the impression trays with the standard front dental arch fastened on the impression tray are digitized by scanning in a registered bite position and are stored,
from a database, which contains digital front dental arch shape data (41) for all standard front dental arches and further dental arches, the standard front dental arch shape data describing the selected standard front dental arch (40) are called up and are integrated with the data of the associated jaw base in the digital prosthesis model, in such a way that the position of the digital standard front dental arch shape data relative to the digitized jaw base data corresponds as well as possible to the position of the standard front dental arch, fastened on the impression tray, relative to the impressed jaw base.

2. Method according to Claim 1, **characterized in that** an antagonist standard front dental arch (42) for the upper or lower jaw, matching the selected standard front dental arch, is called up by the data-processing device in the form of digital antagonist standard front dental arch shape data from the database and combined with the digitized data of the associated jaw base in the digital prosthesis model, in such a way that an optimal match with the selected and positioned front dental arch is achieved.

3. Method according to one of the preceding claims, **characterized in that** after integration of the standard front dental arch shape data and optionally antagonist standard front dental arch shape data into the digital prosthesis model, one or more premolar tooth rows matching the selected standard front dental arch are offered for selection by the data-processing device and, after selection, digital premolar tooth row shape data (44) describing these are called up from the database and subsequently entered with the digitized jaw base data into the digital prosthesis model in a manner matching the already integrated standard front dental arch shape data.

4. Method according to one of the preceding claims, **characterized in that** a graphical representation of the digital prosthesis model is generated by the data-processing device and a digital wax knife is provided as a program function, in order to allow a user to design the gum (116) and the prosthesis base surfaces with the digital wax knife in the graphical representation of the digital prosthesis model, and to transfer the configurations carried out in this way into the digital prosthesis model.

5. Method according to one of the preceding claims, **characterized in that** a multiplicity of predetermined surface textures are provided by the data-processing device for selection, which can be applied after selection to selected regions of the surfaces of the digital prosthesis model.

6. Method according to one of the preceding claims, **characterized in that** at least one gingiva parameter is called up for specification by the data-processing device, to which at least one of the following gingiva parameters belongs: gingival frame of the tooth lengths of the installed teeth, minimum wall thickness of upper and lower jaw bases, surface texture parameters of the palate surface and geometrical parameters of the transition region from the prosthesis body to the tooth, the entered gingiva parameters being transferred into the digital prosthesis model.

7. Method according to one of the preceding claims, **characterized in that** at least one tooth cavity parameter is called up by the data-processing device for specification, to which the width of the adhesive gap between the inner wall of the tooth cavity and the inserted tooth base and the position and number of spacers on the inner wall of the tooth cavity for defined positioning of the base of the inserted tooth with a uniformly wide adhesive gap relative to the inner surfaces of the tooth cavity belong, and the specified tooth cavity parameters for all tooth cavities are transferred into the digital prosthesis model.

8. Method according to one of the preceding claims, **characterized in that** when, during the calculation of the cavities for prefabricated plastic teeth, it is established that the remaining wall thickness of the prosthesis base below the cavity would fall below a predetermined minimum wall thickness, the length to which the plastic tooth is to be reduced in order to obtain the predetermined minimum wall thickness below the cavity is stored in the data-processing device, the cavity adapted to the reduced length of the plastic tooth is stored in the digital prosthesis model, and the plastic tooth is shortened to the stored reduced length of the plastic tooth in a milling device under the control of the data-processing device.

9. Method according to one of the preceding claims, **characterized in that** the data-processing device provides a selection menu for artificial teeth made of different material types, in which a material selection from dental materials is possible for each tooth position, the selected material type being taken into account in the data-processing device during the calculation of the cavities in the prosthesis bases.

10. Method according to one of the preceding claims, **characterized in that** a bite fork having an inner bite arch and an outer arch applied thereon using articulations is used for determining the position of the occlusal plane, the inner arch is introduced between the standard impression trays or the individualized impression trays and is fastened selectively on the upper and/or lower impression tray by means of an interface, the outer arch is adjusted in alignment parallel to the Camper plane and parallel to the bipupillar line by turning the articulations, and the resulting deviations of the parallelism of the inner bite arch from that of the aligned outer arch are read from the scales on the articulations and stored.

11. System for the construction of a total dental prosthesis, having
standard impression trays (2, 4) or individualized impression trays (12, 14) for taking the shapes of upper and lower jaw bases with plastic material, the individualized impression trays having been produced in a manner individually adapted to the patient's jaw on the basis of prior acquisition of the shapes using standard impression trays or by acquiring the shapes by digital scanning and/or phototechnical acquisition,
a bite fork (22) for acquiring the position of the occlusal plane by alignment parallel to the bipupillar line and the Camper plane when taking the shapes of the upper and lower jaw bases, and a memory for storing the digitized position of the occlusal plane relative to the upper and lower jaw bases,
a sampling device (8) for acquiring and digitizing the shapes of the upper and lower jaw bases taken in the plastic material,
a data-processing device for storing the digitized shapes of the upper and lower jaw bases as a digital prosthesis model,
a manufacturing apparatus for producing the upper and lower jaw prosthesis bases from dental materials according to the digital prosthesis model by ablative or constructive methods under the control of the data-processing device,
**characterized in that**
a set of upper or lower standard front dental arches (40) is provided for selection and means are provided for fastening a selected standard front dental arch in the desired position on the impression tray with the upper or lower jaw base impressed therein in the plastic material,
in order to form a starting point for the digital prosthesis model, the sampling device is adapted to digitize and store the shapes of the upper and lower jaw bases taken in the plastic material in the impression trays with the standard front dental arch (40) fastened on the impression tray in a registered bite position by scanning,
the data-processing device is adapted to call up the standard front dental arch shape data describing the selected standard front dental arch from a database, which contains digital standard front dental arch shape data (41) for all standard front dental arches, and to integrate them with the data of the associated jaw base in the digital prosthesis model, in such a way that the position of the digital standard front dental arch shape data relative to the digitized jaw base data corresponds as well as possible to the scanned digitized position of the standard front dental arch, fastened on the impression tray, relative to the impressed jaw base.

12. System according to Claim 11, **characterized in that** the data-processing device is adapted, for the selected standard front dental arch (40) for the upper or lower jaw, to call up a matching antagonist standard front dental arch from the database in the form of digital antagonist standard front dental arch shape data (42) and combine it with the digitized data of the associated jaw base in the digital prosthesis model, in such a way that an optimal match with the selected standard front dental arch is achieved.

13. System according to Claim 11 or 12, **characterized in that** the data-processing device is adapted, after integration of the standard front dental arch shape data (41) and optionally antagonist standard front dental arch shape data (42) into the digital prosthesis model, to offer one or more premolar tooth rows matching the selected standard front dental arch for selection and, after selection, to call up premolar tooth row shape data (44) digitally describing these from the database and enter them with the digitized jaw base data into the digital prosthesis model in a manner matching the already integrated standard front dental arch shape data.

14. System according to one of Claims 11 to 13, **characterized in that** the data-processing device is adapted to generate a graphical representation of the digital prosthesis model on a display and to provide a digital wax knife as a program function, in order to allow a user to design the gum and the prosthesis base surfaces with the digital wax knife in the graphical representation of the digital prosthesis model, and to transfer the configurations carried out into the digital prosthesis model.

15. System according to one of Claims 11 to 14, **characterized in that** the data-processing device is adapted to provide a multiplicity of predetermined surface textures for selection, and to make these applicable after selection to selected regions of the surfaces of the digital prosthesis model and transfer them into the digital prosthesis model.

16. System according to one of Claims 11 to 15, **characterized in that** the data-processing device is adapted to call up at least one gingiva parameter for specification, to which at least one of the following gingiva parameters belongs: gingival frame of the tooth lengths of the installed teeth, minimum wall thickness of upper and lower jaw bases, surface texture parameters of the palate surface and geometrical parameters of the transition region from the prosthesis body to the tooth, the data-processing device being adapted to transfer entered gingiva parameters into the digital prosthesis model.

17. System according to one of Claims 11 to 16, **characterized in that** the data-processing device is adapted to call up at least one tooth cavity parameter for specification, to which the width of the adhesive gap between the inner wall of the tooth cavity and the inserted tooth base and the position and number of spacers on the inner wall of the tooth cavity for defined positioning of the base of the inserted tooth with a uniformly wide adhesive gap relative to the inner surfaces of the tooth cavity belong, and to transfer the specified tooth cavity parameters for all tooth cavities into the digital prosthesis model.

18. System according to one of Claims 11 to 17, **characterized in that** the data-processing device is adapted, when, during the calculation of the cavities for prefabricated plastic teeth, it is established that the remaining wall thickness of the prosthesis base below the cavity would fall below a predetermined minimum wall thickness, to store the length to which the plastic tooth is to be reduced in order to comply with the predetermined minimum wall thickness below the cavity, to adapt the cavity to the reduced length of the plastic tooth and to store it in the digital prosthesis model, and to control a milling device in such a way that the prefabricated plastic tooth is shortened to the stored reduced length of the plastic tooth.

19. System according to one of Claims 11 to 18, **characterized in that** the data-processing device is adapted to provide a selection menu for artificial teeth made of different materials, in which a material selection from dental materials is possible for each tooth position, the data-processing device being adapted to take the selected material type into account during the calculation of the cavities in the prosthesis bases, in order in each case to obtain the optimally dimensioned adhesive gap for the respective material type.

20. System according to one of Claims 11 to 19, **characterized in that** the bite fork (22) has an inner bite arch (24) and an outer arch (26) applied thereon using articulations, the articulations being provided with scales (30) so that, after turning the outer arch into alignment parallel to the Camper plane and parallel to the bipupillar line, the resulting deviation of the parallelism of the inner bite arch from that of the aligned outer arch can be read from the scales on the articulations.

## Revendications

1. Procédé de montage d'une prothèse dentaire totale, dans lequel
on prend les empreintes de la base de mâchoire supérieure et de mâchoire inférieure avec un matériau plastique à l'aide de cuillères d'impression standard (2, 4) ou de cuillères d'impression individualisées (12, 14), qui ont été fabriquées de façon adaptée individuellement à la mâchoire du patient sur la base d'une détection préalable des formes avec des cuillères d'impression standard ou par détection des formes par scannage numérique et/ou par détection phototechnique, lors de la prise des empreintes de la base de mâchoire supérieure et de mâchoire inférieure, on détecte la position du plan d'occlusion avec un occlusionome (22) par alignement parallèlement à la ligne bipupillaire et au plan de Camper par rapport à la base de mâchoire supérieure et de mâchoire inférieure et on les mémorise sous forme numérique,
on numérise les empreintes de la base de mâchoire supérieure et de mâchoire inférieure prises dans le matériau plastique et on les mémorise dans un dispositif de traitement de données sous forme de modèle de prothèse numérique,
on construit les bases de prothèse de mâchoire supérieure et de mâchoire inférieure conformément au modèle de prothèse numérique à partir de matériaux dentaires par des procédés d'usinage ou de construction,
**caractérisé en ce que**
lors de la prise des empreintes de la base de mâchoire supérieure et de mâchoire inférieure avec un matériau plastique, parmi un ensemble préparé d'arcades dentaires frontales standard supérieures et inférieures (40), on en sélectionne une adaptée et on la fixe dans la position souhaitée sur la cuillère d'impression avec le fond de mâchoire supérieure et de mâchoire inférieure imprimé dans celle-ci dans le matériau plastique,
pour la formation d'un point de départ pour le modèle de prothèse numérique, on numérise par scannage les empreintes de la base de mâchoire supérieure et de mâchoire inférieure prises dans le matériau plastique dans les cuillères d'impression avec l'arcade dentaire frontale standard fixée à la cuillère d'impression en position de morsure enregistrée et on les mémorise,
à partir d'une banque de données, qui contient des données numériques de forme d'arcades dentaires frontales (41) pour toutes les arcades dentaires frontales standard et pour d'autres arcades dentaires, on appelle les données de forme d'arcades dentaires frontales standard décrivant l'arcade dentaire frontale standard sélectionnée (40) et on les intègre avec les données de la base de mâchoire correspondante dans le modèle de prothèse numérique, de telle manière que la position des données numériques de forme d'arcade dentaire frontale standard par rapport aux données de base de mâchoire numérisées coïncide aussi bien que possible avec la position de l'arcade dentaire frontale standard fixée à la cuillère d'impression par rapport à la base de mâchoire imprimée.

2. Procédé selon la revendication 1, **caractérisé en ce que** l'on appelle avec le dispositif de traitement de données, à partir de la banque de données, une arcade dentaire frontale standard antagoniste (42) adaptée à l'arcade dentaire frontale standard sélectionnée pour la mâchoire supérieure ou inférieure sous la forme de données de forme d'arcade dentaire frontale standard antagoniste numérique et on la combine avec les données numérisées de la base de mâchoire correspondante dans le modèle de prothèse numérique, de telle manière que l'on obtienne une adaptation optimale avec l'arcade dentaire frontale sélectionnée et positionnée.

3. Procédé selon l'une quelconque des revendications précédentes, **caractérisé en ce que** l'on propose à la sélection, par le dispositif de traitement de données, après intégration des données de forme d'arcade dentaire frontale standard et éventuellement des données de forme d'arcade dentaire frontale standard antagoniste dans le modèle de prothèse numérique, une ou plusieurs rangées de molaires adaptées à l'arcade dentaire frontale standard sélectionnée et après sélection on appelle ces données de forme de rangées de molaires numériques descriptives (44) à partir de la banque de données et on les insère dans le modèle de prothèse numérique avec les données de base de mâchoire numérisées en les ajustant ensuite aux données de forme d'arcade dentaire frontale standard déjà intégrées.

4. Procédé selon l'une quelconque des revendications précédentes, **caractérisé en ce que** l'on produit avec le dispositif de traitement de données une représentation graphique du modèle de prothèse numérique et on prépare un couteau de cire numérique en tant que fonction de programme, afin de permettre à un utilisateur le design de la gencive (116) et des surfaces de base de prothèse avec le couteau de cire numérique dans la représentation graphique du modèle de prothèse numérique, et de reprendre ainsi les configurations opérées dans le modèle de prothèse numérique.

5. Procédé selon l'une quelconque des revendications précédentes, **caractérisé en ce que** l'on prépare, par le dispositif de traitement de données, une multiplicité de textures de surface prédéterminées en vue d'une sélection et, après sélection, elles peuvent être transférées à des zones choisies des surfaces du modèle de prothèse numérique.

6. Procédé selon l'une quelconque des revendications précédentes, **caractérisé en ce que** l'on demande par le dispositif de traitement de données au moins un paramètre de gencive en vue de la spécification, auxquels au moins un des paramètres de gencive suivant appartient: logement gingival des longueurs de dent des dents dressées, épaisseur de paroi minimale de base de mâchoire supérieure et de mâchoire inférieure, paramètre de texture de surface de la surface du palais et paramètres géométriques de la zone de transition du corps de prothèse à la dent, dans lequel on reprend les paramètres de gencive introduits dans le modèle de prothèse numérique.

7. Procédé selon l'une quelconque des revendications précédentes, **caractérisé en ce que** l'on demande par le dispositif de traitement de données au moins un paramètre de cavité de dent en vue de la spécification, auxquels appartiennent la largeur de la fente de collage entre la paroi intérieure de la cavité de dent et la base de dent introduite et le lieu et le nombre d'écarteurs à la paroi intérieure de la cavité de dent pour le positionnement défini de la base de dent de la dent introduite avec une fente de collage de largeur uniforme par rapport aux faces intérieures de la cavité de dent, et on reprend les paramètres de cavité de dent spécifiés pour toutes les cavités de dent dans le modèle de prothèse numérique.

8. Procédé selon l'une quelconque des revendications précédentes, **caractérisé en ce que** l'on mémorise dans le dispositif de traitement de données, lorsque l'on constate lors du calcul des cavités pour des dents artificielles confectionnées que l'épaisseur de paroi restante de la base de prothèse sous la cavité serait inférieure à une épaisseur de paroi minimale prédéterminée, à quelle longueur la dent artificielle doit être réduite pour obtenir l'épaisseur de paroi minimale prédéterminée sous la cavité, on mémorise la cavité adaptée à la longueur réduite de la dent artificielle dans le modèle de prothèse numérique, et on raccourcit la dent artificielle dans un dispositif de fraisage sous la commande du dispositif de traitement de données jusqu'à la longueur réduite mémorisée de la dent artificielle.

9. Procédé selon l'une quelconque des revendications précédentes, **caractérisé en ce que** le dispositif de traitement de données prépare un menu de sélection pour des dents artificielles en différents types de matériaux, dans lequel une sélection de matériau parmi des matériaux dentaires est possible pour chaque position de dent, dans lequel on tient compte dans le dispositif de traitement de données du type de matériau sélectionné lors du calcul des cavités dans les bases de prothèse.

10. Procédé selon l'une quelconque des revendications précédentes, **caractérisé en ce que**, pour la détermination de la position du plan d'occlusion, on utilise un occlusionome avec une arcade de morsure intérieure et une arcade extérieure montée sur celle-ci par des articulations, on introduit l'arcade intérieure entre les cuillères d'impression standard ou les cuillères d'impression individualisées et on la fixe au choix par une interface à la cuillère d'impression supérieure et/ou inférieure, on règle l'arcade extérieure par pivotement des articulations en alignement parallèle au plan de Camper et parallèle à la ligne bipupillaire, et on lit et on mémorise les écarts de parallélisme produits de l'arcade de morsure par rapport à l'arcade extérieure alignée sur les échelles prévues sur les articulations.

11. Système de montage d'une prothèse dentaire totale, avec
des cuillères d'impression standard (2, 4) ou des cuillères d'impression individualisées (12, 14) destinées à prendre les empreintes de la base de mâchoire supérieure et de mâchoire inférieure avec un matériau plastique, dans lequel les cuillères d'impression individualisées ont été produites de façon adaptée individuellement à la mâchoire du patient sur la base d'une détection préalable des formes avec des cuillères d'impression standard ou par détection des formes par scannage numérique et/ou par détection phototechnique,
un occlusionome (22) destiné à détecter le plan d'occlusion par alignement parallèlement à la ligne bipupillaire et au plan de Camper lors de la prise des empreintes de la base de mâchoire supérieure et de mâchoire inférieure et une mémoire destinée à mémoriser la position numérisée du plan d'occlusion par rapport à la base de mâchoire supérieure et de mâchoire inférieure,
un dispositif de balayage (8) destiné à détecter et à numériser les empreintes de la base de mâchoire supérieure et de mâchoire inférieure prises dans le matériau plastique,
un dispositif de traitement de données destiné à mémoriser les empreintes numérisées de la base de mâchoire supérieure et de mâchoire inférieure comme modèle de prothèse numérique,
un appareil de fabrication destiné à construire des bases de prothèse de mâchoire supérieure et de mâchoire inférieure conformément au modèle de prothèse numérique à partir de matériaux dentaires sous la commande du dispositif de traitement de données par des procédés d'usinage ou de construction,
**caractérisé en ce que**
il existe un ensemble d'arcades dentaires frontales standard supérieures et inférieures (40) à sélectionner et des moyens pour fixer une arcade dentaire frontale standard sélectionnée dans la position souhaitée sur la cuillère d'impression avec le fond de mâchoire supérieure et de mâchoire inférieure imprimé dans le matériau plastique,
le dispositif de balayage est conçu pour former un point de départ pour le modèle de prothèse numérique en vue de numériser par scannage les empreintes de la base de mâchoire supérieure et de mâchoire inférieure imprimée dans le matériau plastique dans les cuillères d'impression avec l'arcade dentaire frontale standard (40) fixée sur la cuillère d'impression en position de morsure enregistrée et la mémoriser,
le dispositif de traitement de données est conçu pour appeler à partir d'une banque de données, qui contient des données de forme d'arcades dentaires frontales standard numériques (41) pour toutes les arcades dentaires frontales standard, les données de forme d'arcade dentaire frontale standard décrivant l'arcade dentaire frontale standard sélectionnée et les intégrer avec les données de la base de mâchoire correspondante dans le modèle de prothèse numérique, de telle manière que la position des données de forme d'arcade dentaire frontale standard numérique par rapport aux bases de mâchoire numérisées coïncide aussi bien que possible avec la position numérisée scannée de l'arcade dentaire frontale standard fixée à la cuillère d'impression par rapport à la base de mâchoire imprimée.

12. Système selon la revendication 11, **caractérisé en ce que** le dispositif de traitement de données est conçu pour appeler à partir de la banque de données, pour l'arcade dentaire frontale standard sélectionnée (40) pour la mâchoire supérieure ou la mâchoire inférieure, une arcade dentaire frontale standard antagoniste numérique adaptée à celle-ci sous la forme de données de forme d'arcade dentaire frontale standard antagoniste numériques (42) et pour les combiner avec les données numérisées de la base de mâchoire correspondante dans le modèle de prothèse numérique, de façon à obtenir une adaptation optimale avec l'arcade dentaire frontale standard sélectionnée.

13. Système selon la revendication 11 ou 12, **caractérisé en ce que** le dispositif de traitement de données est conçu pour offrir à la sélection, après l'intégration des données de forme d'arcade dentaire frontale standard (41) et éventuellement des données de forme d'arcade dentaire frontale standard antagoniste (42) dans le modèle de prothèse numérique, une ou plusieurs rangée(s) de molaires adaptée(s) à l'arcade dentaire frontale standard sélectionnée et, après la sélection, appeler ces données de forme de rangée de molaires numérisée descriptive (44) à partir de la banque de données et les insérer dans le modèle de prothèse numérique avec les données de base de mâchoire numérisées en les ajustant aux données de forme d'arcade dentaire frontale standard déjà intégrées.

14. Système selon l'une quelconque des revendications 11 à 13, **caractérisé en ce que** le dispositif de traitement de données est conçu pour produire une représentation graphique du modèle de prothèse numérique sur un écran et préparer un couteau de cire numérique comme fonction de programme, afin de permettre à un utilisateur le design de la gencive et des surfaces de base de prothèse avec le couteau de cire numérique dans la représentation graphique du modèle de prothèse numérique, et pour reprendre les configurations opérées dans le modèle de prothèse numérique.

15. Système selon l'une quelconque des revendications 11 à 14, **caractérisé en ce que** le dispositif de traitement de données est conçu pour proposer à la sélection une multiplicité de textures de surface prédéterminées et, après la sélection, de permettre le transfert de celles-ci sur des zones choisies des surfaces du modèle de prothèse numérique et de les reprendre dans le modèle de prothèse numérique.

16. Système selon l'une quelconque des revendications 11 à 15, **caractérisé en ce que** le dispositif de traitement de données est conçu pour demander au moins un paramètre de gencive en vue de la spécification, auxquels appartient au moins un des paramètres de gencive suivants: logement gingival des longueurs de dent des dents dressées, épaisseur de paroi minimale de base de mâchoire supérieure et de mâchoire inférieure, paramètre de texture de surface de la surface du palais et paramètres géométriques de la zone de transition du corps de prothèse à la dent, le dispositif de traitement de données étant conçu pour reprendre les paramètres de gencive introduits dans le modèle de prothèse numérique.

17. Système selon l'une quelconque des revendications 11 à 16, **caractérisé en ce que** le dispositif de traitement de données est conçu pour demander au moins un paramètre de cavité de dent en vue de la spécification, auxquels appartiennent la largeur de la fente de collage entre la paroi intérieure de la cavité de dent et la base de dent introduite et le lieu et le nombre d'écarteurs à la paroi intérieure de la cavité de dent pour le positionnement défini de la base de dent de la dent introduite avec une fente de collage de largeur uniforme par rapport aux faces intérieures de la cavité de dent, et pour reprendre les paramètres de cavité de dent spécifiés pour toutes les cavités de dent dans le modèle de prothèse numérique.

18. Système selon l'une quelconque des revendications 11 à 17, **caractérisé en ce que** le dispositif de traitement de données est conçu pour mémoriser, lorsque l'on constate lors du calcul des cavités pour des dents artificielles confectionnées que l'épaisseur de paroi restante de la base de prothèse sous la cavité serait inférieure à une épaisseur de paroi minimale prédéterminée, à quelle longueur la dent artificielle doit être réduite pour respecter l'épaisseur de paroi minimale prédéterminée sous la cavité, pour adapter la cavité à la longueur réduite de la dent artificielle et la mémoriser dans le modèle de prothèse numérique, et pour commander un dispositif de fraisage de telle manière que la dent artificielle soit raccourcie jusqu'à la longueur réduite mémorisée de la dent artificielle.

19. Système selon l'une quelconque des revendications 11 à 18, **caractérisé en ce que** le dispositif de traitement de données est conçu pour préparer un menu de sélection pour des dents artificielles en différents types de matériaux, dans lequel une sélection de matériau parmi des matériaux dentaires est possible pour chaque position de dent, dans lequel le dispositif de traitement de données est conçu pour tenir compte du type de matériau sélectionné lors du calcul des cavités dans les bases de prothèse, afin d'obtenir dans chaque cas la fente de collage dimensionnée de façon optimale pour le type de matériau respectif.

20. Système selon l'une quelconque des revendications 11 à 19, **caractérisé en ce que** l'occlusionome (22) présente une arcade de morsure intérieure (24) et une arcade extérieure (26) montée sur celle-ci par des articulations, dans lequel les articulations sont munies d'échelles (30), de telle manière qu'après le pivotement de l'arcade extérieure en alignement parallèlement au plan de Camper et parallèlement à la ligne bipupillaire, l'écart de parallélisme obtenu de la mâchoire de morsure intérieure par rapport à la mâchoire extérieure alignée puisse être lu sur les échelles prévues sur les articulations.
